# EUROPEAN PATENT APPLICATION

(11) **EP 4 737 756 A1**
(43) Date of publication of application: **06.05.2026**
(21) Application number: 24878631.1
(22) Date of filing: 08.08.2024
(51) Int. Cl.: F16D 55/24, F16D 65/14, F16D 65/12, F16D 65/00, F16D 121/20, F16D 127/04, H02K 7/102, H02K 7/12

(54) **NOVEL BRAKE AND HUB MOTOR**

(30) Priority: 16.10.2023 CN 202311331256; 16.10.2023 CN 202311331146
(71) Applicant: Altra Industrial Motion (Shenzhen) Co., Ltd., Shenzhen, Guangdong 518100 (CN)
(72) Inventor: LU, Cha, Shenzhen, Guangdong 518100 (CN); WU, Kongjian, Shenzhen, Guangdong 518100 (CN); ZHANG, Danqi, Shenzhen, Guangdong 518100 (CN); BERNARD, Atkesone, Shenzhen, Guangdong 518100 (CN)
(74) Representative: Isarpatent
(86) International application number: PCT/CN2024/110692
(87) International publication number: WO 2025/081979

(57) **Abstract**

The present application provides a novel brake and a hub motor, which belong to the technical field of mechanical braking. The novel brake comprises a braking stator, an armature, a main coil, an elastic element, N friction discs, N movable plates and an assembly element; wherein the N movable plates and the N friction discs are arranged alternately, the Nth movable plate is disposed adjacent to the Nth friction disc, the Nth friction disc abuts against a limit step, and N is an integer greater than or equal to 1; the outer peripheral dimensions of the N friction discs are all larger than those of the N movable plates, and the outer peripheries of the N friction discs are each provided with a matching part, which is configured to be matched with a braking part. The N friction discs and the N movable plates are all sleeved on the outer circumference of the braking stator, which greatly reduces the overall thickness of the novel brake, instead of being fitted to the braking shaft via the central hole, the friction discs are matched with the braking part through the matching parts provided on the outer circumference, this enables the novel brake to be applied to a wider range of application scenarios, allows for more flexible design of the dimensions of the braking stator and the armature, and reduces the overall volume of the novel brake.

## Description

### CROSS-REFERENCE TO RELATED APPLICATIONS

This application claims priority to Chinese Patent Application No. 202311331256.6, filed on October 16, 2023 and Chinese Patent Application No. 202311331146.X, filed on October 16, 2023. The disclosures of the aforementioned applications are hereby incorporated by reference in their entireties.

### TECHNICAL FIELD

The present application relates generally to the technical field of mechanical braking, and particularly relates to a novel brake and a hub motor.

### BACKGROUND

The brake mainly relies on the coordinated operation of components including stator, coil, armature, friction disc, and elastic element to achieve braking. When the coil is energized, a magnetic field is generated around its outer circumference, and an attractive magnetic force is produced in the gap between the stator and the armature. In the structural composition of the brake, the stator, the armature and the friction disc are generally arranged in a stacked configuration. The stator, the armature and the friction disc are provided with axially central holes of preset dimensions. Typically, the axially central hole of the friction disc is matched with the braking shaft via a shaft sleeve. The size of the central hole of the brake is limited by the dimensions of the shaft sleeve and the braking shaft. When braking is not required, the friction disc rotates synchronously with the braking shaft; when braking is required, the friction disc restricts the rotation of the braking shaft. Therefore, the dimensions of the brake need to be designed based on the sizes of the braking shaft and the shaft sleeve.

When traditional brakes are applied to equipment with large overall structural dimensions, for example, hub motor, two structural approaches are commonly adopted to achieve the braking coordination relationship between the friction disc and the rotor of the hub motor. One approach is to design the brake with an increased size, and fit the shaft sleeve and the braking shaft through the large-dimension central hole of the friction disc in sequence, thereby establishing the braking relationship between the friction disc and the rotor of the hub motor. However, this results in a larger overall volume and increased weight. The other approach is to retain the original dimensions of the brake and implement the braking relationship between the friction disc and the rotor of the hub motor by configuring corresponding transmission structures, which also leads to a larger overall volume and a more complex structural design.

Consequently, the application scenarios of traditional brake are limited, and they tend to result in a larger overall volume.

### TECHNICAL PROBLEMS

The purpose of the present application is to provide a novel brake and a hub motor, aiming to solve the technical problems of traditional brake, namely limited application scenarios and tendency to result in a large overall volume.

### TECHNICAL SOLUTIONS

To achieve the aforesaid purpose, the technical solution adopted in the present application is as follows:
In a first aspect, the present application provide a novel brake, including: a braking stator, having a first end face and a second end face in an axial direction, wherein the first end face is provided with a first groove and a second groove, and an outer circumference of the braking stator is provided with a limit step, the limit step forming a limit space facing the second end face on the outer circumference of the braking stator; an armature, arranged adjacent to the first end face; a main coil, arranged in the first groove; an elastic element, arranged in the second groove; N friction discs, being annular in structure, sleeved on the outer circumference of the braking stator and located in the limit space; N movable plates, being annular in structure, sleeved on the outer circumference of the braking stator and located in the limit space, wherein the N movable plates and the N friction discs are arranged alternately, an Nth movable plate is arranged adjacent to an Nth friction disc, the Nth friction disc abuts against the limit step, and N is an integer greater than or equal to 1; and an assembly element, fixedly connected with the armature and a first movable plate of the N movable plates, the first movable plate being farthest from the limit step among the N movable plates;
wherein, when the main coil is energized which generates a magnetic field, the armature is caused to move toward the braking stator against an elastic force of the elastic element, and the armature drives the first movable plate to move away from the N friction discs, to release the N friction discs; and outer circumferential dimensions of the N friction discs are larger than outer circumferential dimensions of the N movable plates, and outer circumferences of the N friction discs are each provided with a matching part configured to be adapted to a braking part of a target device.

In some possible implementation, the matching part includes one radially extending matching protrusion; or the matching part includes a plurality of radially extending matching protrusions, with a matching groove formed between every two adjacent matching protrusions; or the matching part is a plurality of matching grooves or a plurality of matching holes; and when N is greater than 1, the N matching parts have shapes different from one another, have same shapes, or have shapes some of which are not same.

In some possible implementation, an inner circumference of at least one of the N movable plates is provided with a positioning protrusion; the outer circumference of the braking stator is provided with a positioning groove adapted to the positioning protrusion; and the assembly element is slidably inserted through the braking stator.

In some possible implementation, N is greater than 1; the N movable plates are provided with positioning protrusions; the positioning protrusion of the first movable plate is arranged in a staggered manner in a circumferential direction of the braking stator relative to positioning protrusions of remaining movable plates of the N movable plates; and a preset distance is maintained between the assembly element and the positioning protrusions of the remaining movable plates.

In some possible implementation, the positioning groove corresponding to the positioning protrusion of the first movable plate is defined as a first positioning groove, and positioning grooves corresponding to the positioning protrusions of the remaining movable plates are defined as second positioning grooves; the first positioning groove and the second positioning grooves extend from the second end face toward the first end face, and an axial depth of the first positioning groove is smaller than that of the second positioning grooves.

In some possible implementation, N is greater than 1; the N movable plates are provided with positioning protrusions; the positioning protrusion of the first movable plate is aligned with positioning protrusions of remaining movable plates of the N movable plates in a circumferential direction of the braking stator; projections of the positioning protrusions of the remaining movable plates in the axial direction fall within a projection of the positioning protrusion of the first movable plate in the axial direction; and a preset distance is maintained between the assembly element and the positioning protrusions of the remaining movable plates.

In some possible implementation, a surface of the positioning protrusion includes a first arc surface, and a surface of the positioning groove includes a second arc surface adapted to the first arc surface.

In some possible implementation, the first end face is further provided with a third groove; the third groove is arranged on an inner side or an outer side of the first groove; and the novel brake further includes a secondary coil arranged in the third groove.

In some possible implementation, the novel brake further includes a mounting element; the mounting element and the assembly element are independent of each other; and the mounting element is adapted to the braking stator, and a locking end of the mounting element selectively extends out from the first end face or the second end face.

In some possible implementation, the novel brake further includes a protective structure; the protective structure and the target device enclose a sealed space; the armature, the N friction discs and the N movable plates are located in the sealed space; and the protective structure at least partially covers the braking part of the target device.

In some possible implementation, the novel brake further includes a manual release assembly that is a rotating element; the rotating element is adapted to the braking stator and the armature to control a distance between the braking stator and the armature, to release the N friction discs.

In some possible implementation, the novel brake further includes a manual release assembly that includes a release handle, a release connector and a release elastic element; wherein the release connector is slidably inserted through the release handle and locked in the braking stator or the target device; the release elastic element is sleeved on the release connector and located between the release handle and the braking stator; and the release handle is pressed against or moved away from the armature to control a distance between the braking stator and the armature.

In some possible implementation, the novel brake further includes a manual release assembly that includes a release handle, a release connector, an acting block and a release elastic element; wherein the manual release assembly is located at an armature end; the armature is provided with a limit slot, and the release handle is provided with a connecting hole; the release connector is slidably inserted through the connecting hole and fixed in the braking stator; the release elastic element is sleeved on the release connector and located between the release handle and the braking stator; and the acting block is arranged on the release handle and slides out of or into the limit slot when the release handle rotates, so as to control a distance between the braking stator and the armature; or
wherein the manual release assembly is located at a stator end; the braking stator is provided with a limit slot, and the release handle is provided with a connecting hole; the release connector is slidably inserted through the connecting hole and fixed in the armature or the first movable plate; the release elastic element is sleeved on the release connector and located between the release handle and a head of the release connector; and the acting block is arranged on the release handle and slides out of or into the limit slot when the release handle rotates, so as to control a distance between the braking stator and the armature.

In some possible implementation, the novel brake further includes a manual release assembly that includes a release handle, a driving screw and a driven screw; when the release handle is moved toward or away from the braking stator, the driven screw is selectively adapted to the armature or the first movable plate, so as to control a distance between the braking stator and the armature.

In some possible implementation, the novel brake further including a manual release assembly that is a wedge block; the wedge block is configured to act between the armature and the target device, and control a distance between the braking stator and the armature by pressing the armature.

In a second aspect, the present application provide a hub motor, including: a housing, being a hollow structure with an opening at one end; a main shaft, rotatably connected with the housing and extending out of the housing; a motor stator, wound around the main shaft and fixedly connected with the main shaft; an armature winding, wound around the motor stator and fixedly connected with the motor stator; a magnetic steel winding, wound around an inner wall of the housing, fixedly connected with the inner wall of the housing, and arranged at a radial interval from the armature winding; an end cover, covering the opening, wound around the main shaft, and rotatably connected with the main shaft; a braking part, wound around the main shaft and extending in an axial direction, selectively arranged on the inner wall or an outer wall of the housing or an inner wall or an outer wall of the end cover, and forming a braking cavity together with the housing or the end cover; and a novel brake, located on a same side as the braking part, including a braking stator, a main coil arranged on the braking stator, an elastic element arranged on the braking stator, an armature arranged adjacent to the braking stator and friction discs; wherein the friction discs are at least partially located in the braking cavity, an outer circumference of each friction disc is provided with a matching part, the matching part is adapted to the braking part to brake the housing, the magnetic steel winding and the end cover, and a radial dimension of the matching part is larger than an outer diameter of the armature; wherein the friction discs are sleeved on an outer circumference of the braking stator.

In some possible implementation, the friction discs are sleeved on the outer circumference of the braking stator, and the outer circumference of the braking stator is a cylindrical surface parallel to the axial direction; a quantity of the friction discs is N, and N is an integer greater than or equal to 1; the novel brake further includes one outer movable plate and N-1 middle movable plates, and each middle movable plate is located between two adjacent friction discs; the braking stator has a first end face and a second end face in the axial direction, the armature is arranged adjacent to the first end face, the outer circumference of the braking stator is provided with a limit step adjacent to the first end face, and the limit step forms a limit space facing the second end face on the outer circumference of the braking stator; and the outer movable plate, the N-1 middle movable plates and the friction discs are located in the limit space, the outer movable plate is arranged adjacent to the second end face, the outer movable plate is fixedly connected with the armature through an assembly element, and the friction discs and the N-1 middle movable plates are located between the outer movable plate and the limit step.

In some possible implementation, the braking part is arranged on the inner wall of the housing or the inner wall of the end cover; the motor stator forms an accommodating cavity around the main shaft; and the braking part is at least partially located in the accommodating cavity, and the novel brake is at least partially located in the accommodating cavity.

In some possible implementation, the motor stator includes: a mounting part, fixed to the main shaft, the braking stator being sleeved on the mounting part; an extending part, connected with the mounting part, arranged on an outer circumference of the mounting part, and provided with a heat dissipation hole; and a supporting part, connected with the extending part and arranged on an outer circumference of the extending part; wherein an axial dimension of the mounting part is larger than an axial dimension of the extending part, an axial dimension of the supporting part is larger than an axial dimension of the extending part, and the accommodating cavity is formed by the mounting part, the extending part and the supporting part.

In some possible implementation, the novel brake further includes a mounting element; a locking end of the mounting element extends out from a side of the novel brake in the axial direction, and the locking end is locked with the extending part.

In some possible implementation, the novel brake further includes a supporting element sleeved on the mounting element; one end of the supporting element in the axial direction abuts against the extending part, and the other end abuts against the braking stator, so as to keep the novel brake and the motor stator spaced apart.

In some possible implementation, a central hole of the braking stator is fixed to the main shaft or the motor stator.

In some possible implementation, the braking part includes a sub-fixed part and a sub-braking part that are connected to each other; the sub-fixed part extends in the axial direction, and is arranged around the main shaft and fixed to the housing or the end cover; and the sub-braking part protrudes from the sub-fixed part and extends in a radial direction, and is arranged around the main shaft and adapted to the matching part.

In some possible implementation, the braking part includes a plurality of cylinders arranged around the main shaft; and the plurality of cylinders extend in the axial direction, are adapted to the matching part, and are configured to drive the friction discs to rotate together.

### ADVANTAGEOUS EFFECTS OF THE DISCLOSURE

The novel brake provided in the present application has at least the following technical effects: compared with the conventional technology, in the novel brake provided in the present application, the N friction discs and the N movable plates are all sleeved on the outer circumference of the braking stator; the thickness of the novel brake only depends on the thickness of the braking stator and the thickness of the armature, which greatly reduces the total thickness of the novel brake; instead of being fitted with the shaft sleeve and the braking shaft through the central hole, the friction discs are directly matched with the braking part of the target device through the matching parts arranged on the outer circumferences, which allows the novel brake to be applied to a wider range of application scenarios, and the dimensions of the braking stator and the armature can be designed more freely; the overall volume of the novel brake can be further reduced by reducing the inner and outer diameters of the braking stator; when the dimension of the central hole of the braking stator is smaller, the inner diameter of the main coil can be reduced, which in turn can decrease the outer diameter of the main coil; decreasing the inner and outer diameters of the braking stator, with the coil thickness, the coil resistance and the coil current kept unchanged, the main coil can have more turns, which can increase the ampere-turns under the same power, enhance the magnetic force and increase the braking torque; meanwhile, in contrast to the conventional technology where the friction discs of the brake are arranged inside the stator or stacked with the stator, with both the inner and outer diameters of the friction areas of the friction discs smaller than the outer diameter of the stator, the friction discs of the novel brake provided in the present application are sleeved on the outer circumference of the braking stator, which enables the increase of the inner and outer diameters of the friction areas of the friction discs without increasing the thickness of the novel brake, thereby increasing the braking torque; increasing the inner diameter of the friction discs can also reduce the mass of the friction discs, lessen the impact on the total inertia of the target device, and improve the start-stop sensitivity of the target device, thus ensuring the braking effect without increasing the thickness of the novel brake; the movable plates have lower precision requirements and lower production costs than the friction discs, since the friction discs rub against the movable plates instead of the armature, only the movable plates need to be replaced after long-term use, resulting in low replacement costs; in addition, dust generated in the friction areas where the friction discs and the movable plates contact is not easy to enter the interior of the novel brake, which avoids malfunctions of internal components caused by dust; the radial dimension of the matching part is larger than that of the friction area, making it easier to control the geometric tolerances of the plane where the friction area is located relative to the central axis during the production process, thus facilitating manufacturing and achieving a higher qualified rate; when the matching part is subjected to force, the generated stress and strain are smaller, which can improve the service life of the friction disc.

The hub motor provided in the present application has at least the following technical effects: compared with the conventional technology, in the hub motor provided in the present application, a reasonable spatial layout is adopted for the housing, the main shaft, the motor stator, the armature winding, the magnetic steel winding, the end cover, the braking part and the novel brake; by arranging the braking part on the housing or the end cover and disposing the matching part on the outer circumference of the each friction disc, the braking of the housing, the magnetic steel winding and the end cover can be realized through the matching relationship between the matching part and the braking part, which eliminates the need for the friction discs to be fitted with the shaft sleeve, the housing, the end cover and other components through the central hole, allowing for more flexible design of the central hole dimensions of the braking stator and the armature of the novel brake, so that the diameters of the central holes of the braking stator and the armature can be smaller, there is no need to configure a shaft sleeve, and the shapes of the central holes can be more diversified; when the diameter of the central hole of the braking stator is smaller, the main coil of the novel brake can expand radially toward the central hole, and both the inner and outer diameters of the main coil can be reduced; when both the inner and outer diameters of the main coil are reduced, with the coil thickness, the coil resistance and the coil current remaining unchanged, the main coil can be obtained with more turns; a higher number of ampere-turns leads to a stronger magnetic field, making the coil power easier to control and increasing the coil energy, which in turn enhances the magnetic force and increases the braking torque; this makes the volume of the novel brake easier to control and miniaturize, thereby reducing the overall volume of the hub motor.

### BRIEF DESCRIPTION OF THE DRAWINGS

To more clearly illustrate the technical solutions in the embodiments of the present application, the accompanying drawings required for describing the embodiments or the prior art will be briefly introduced below. Obviously, the accompanying drawings in the following description are merely some embodiments of the present application. For those of ordinary skill in the art, other accompanying drawings can be obtained based on these drawings without exerting creative efforts.
Fig. 1 is a perspective structural schematic diagram of a novel brake provided in an embodiment of the present application;
Fig. 2 is a bottom view schematic diagram of the novel brake shown in Fig. 1;
Fig. 3 is a top view schematic diagram of the novel brake shown in Fig. 1;
Fig. 4 is a cross-sectional schematic diagram of the novel brake shown in Fig. 3 taken along section A-A;
Fig. 5 is a cross-sectional schematic diagram of the novel brake shown in Fig. 3 taken along section B-B;
Fig. 6 is a perspective structural schematic diagram of a braking stator in the novel brake shown in Fig. 1;
Fig. 7 is a perspective structural schematic diagram of a braking stator in the novel brake shown in Fig. 1 from another angle;
Fig. 8 is an exploded structural schematic diagram of the novel brake shown in Fig. 1;
Fig. 9 is a structural schematic diagram of a novel brake provided in another embodiment of the present application;
Fig. 10 is a cross-sectional schematic diagram of the novel brake shown in Fig. 9 taken along section C-C;
Fig. 11 is a structural schematic diagram of a novel brake provided in another embodiment of the present application;
Fig. 12 is a cross-sectional schematic diagram of the novel brake shown in Fig. 11 taken along section D-D;
Fig. 13 is a perspective structural schematic diagram of a movable plate in the novel brake shown in Fig. 11;
Fig. 14 is a structural schematic diagram of a novel brake provided in another embodiment of the present application;
Fig. 15 is a cross-sectional schematic diagram of the novel brake shown in Fig. 14 taken along section E-E;
Fig. 16 is a cross-sectional schematic diagram of the novel brake shown in Fig. 14 taken along section F-F;
Fig. 17 is an exploded structural schematic diagram of the novel brake shown in Fig. 14;
Fig. 18 is a perspective structural schematic diagram of a braking stator in the novel brake shown in Fig. 14;
Fig. 19 is a structural schematic diagram of a novel brake provided in another embodiment of the present application;
Fig. 20 is a cross-sectional schematic diagram of the novel brake shown in Fig. 19 taken along section G-G;
Fig. 21 is a cross-sectional schematic diagram of the novel brake shown in Fig. 19 taken along section H-H;
Fig. 22 is a perspective structural schematic diagram of a braking stator in the novel brake shown in Fig. 19;
Fig. 23 is a structural schematic diagram of a novel brake provided in another embodiment of the present application;
Fig. 24 is a cross-sectional schematic diagram of the novel brake shown in Fig. 23 taken along section I-I;
Fig. 25 is a cross-sectional schematic diagram of the novel brake shown in Fig. 23 taken along section J-J;
Fig. 26 is a structural schematic diagram of a novel brake with a manual release assembly provided in a first embodiment of the present application;
Fig. 27 is a cross-sectional schematic diagram of the novel brake shown in Fig. 26 taken along section K-K;
Fig. 28 is a cross-sectional schematic diagram taken along section K'-K' in another implementation of the novel brake with a manual release assembly provided in the first embodiment of the present application;
Fig. 29 is a structural schematic diagram of a novel brake with a manual release assembly provided in a second embodiment of the present application;
Fig. 30 is a cross-sectional schematic diagram of the novel brake shown in Fig. 29 taken along section L-L;
Fig. 31 is a structural schematic diagram of a novel brake with a manual release assembly provided in a third embodiment of the present application;
Fig. 32 is a cross-sectional schematic diagram of the novel brake shown in Fig. 31 taken along section M-M;
Fig. 33 is a structural schematic diagram of a novel brake with a manual release assembly provided in a fourth embodiment of the present application;
Fig. 34 is a cross-sectional schematic diagram of the novel brake shown in Fig. 33 taken along section N-N;
Fig. 35 is a structural schematic diagram of a novel brake with a manual release assembly provided in a fifth embodiment of the present application;
Fig. 36 is a cross-sectional schematic diagram of the novel brake shown in Fig. 35 taken along section O-O;
Fig. 37 is a partial enlarged schematic diagram of structure F1 shown in Fig. 36;
Fig. 38 is a cross-sectional schematic diagram of the novel brake shown in Fig. 35 taken along section P-P;
Fig. 39 is a partial enlarged schematic diagram of structure F2 shown in Fig. 38;
Fig. 40 is a structural schematic diagram of a novel brake with a manual release assembly provided in a sixth embodiment of the present application;
Fig. 41 is a cross-sectional schematic diagram of the novel brake shown in Fig. 40 taken along section Q-Q;
Fig. 42 is a structural schematic diagram of a novel brake with a manual release assembly provided in a seventh embodiment of the present application;
Fig. 43 is a cross-sectional schematic diagram of the novel brake shown in Fig. 42 taken along section R-R;
Fig. 44 is a structural schematic diagram of a novel brake with a manual release assembly provided in an eighth embodiment of the present application;
Fig. 45 is a cross-sectional schematic diagram of the novel brake shown in Fig. 44 taken along section S-S;
Fig. 46 is a structural schematic diagram of a novel brake with a manual release assembly provided in a ninth embodiment of the present application;
Fig. 47 is a cross-sectional schematic diagram of the novel brake shown in Fig. 46 taken along section T-T;
Fig. 48 is a structural schematic diagram of a novel brake with a manual release assembly provided in tenth embodiment of the present application;
Fig. 49 is a cross-sectional schematic diagram of the novel brake shown in Fig. 48 taken along section U-U;
Fig. 50 is a cross-sectional schematic diagram of a hub motor provided in an embodiment of the present application;
Fig. 51 is a perspective cross-sectional schematic diagram of the hub motor shown in Fig. 50;
Fig. 52 is a fitting schematic diagram of a braking part and a matching part in the hub motor shown in Fig. 50; and
Fig. 53 is a structural schematic diagram of a motor stator in the hub motor shown in Fig. 50.

### Reference numerals:

1-novel brake; 10-braking stator; 11-first end face; 111-first groove; 112-second groove; 113-third groove; 114-inner magnetic pole face; 115-outer magnetic pole face; 116-middle magnetic pole face; 12-second end face; 13-limit step; 131-limit space; 14-positioning groove; 141-first positioning groove; 142-second positioning groove; 20-armature; 21-limit slot; 30-main coil; 40-elastic element; 50-friction disc; 51-matching part; 511-matching groove; 512-matching protrusion; 60-movable plate; 601-outer movable plate; 602-middle movable plate; 61-positioning protrusion; 70-assembly element; 71-assembly screw; 72-guide post; 80-secondary coil; 90-mounting element; 100-manual release assembly; 101-rotating handwheel; 1011-operating part; 1012-rotating part; 102-release screw; 103-release handle; 1031-force application part; 1032-release part; 1033-bending part; 1034-connecting hole; 104-release connector; 105-release elastic element; 106-driving screw; 107-acting block; 108-driven screw; 109-gasket;
2-target device; 210-housing; 220-main shaft; 230-motor stator; 231-mounting part; 232-extending part; 2321-heat dissipation hole; 233-supporting part; 234-accommodating cavity; 240-armature winding; 250-magnetic steel winding; 260-end cover; 270-braking part; 271-sub-fixed part; 272-sub-braking part; 273-braking cavity; 281-first bearing; 282-second bearing.

### DETAILED DESCRIPTION OF ILLUSTRATIVE EMBODIMENTS

To make the technical problems to be solved, technical solutions and beneficial effects of the present application more clear and comprehensible, the present application is described in further detail below with reference to the accompanying drawings and embodiments. It should be understood that the specific embodiments described herein are merely used to explain then present application and are not intended to limit the present application.

It should be noted that when an element is referred to as being "fixed in/on/at/to", "connected to/with", "arranged in/on/at/to" or "located in/on/at/to" another element, there may or may not be an intermediate element present. In addition, when an element is referred to as being "connected to/with" another element, it can be interpreted as mechanical connection, electrical connection, communication connection, etc., in accordance with the conventional understanding of those skilled in the art. As used herein, the term "plurality" refers to a quantity of two or more; the term "several" refers to a quantity of one or more.

Unless otherwise defined, all technical and scientific terms used herein have the same meanings as commonly understood by those skilled in the art to which the present application belongs.

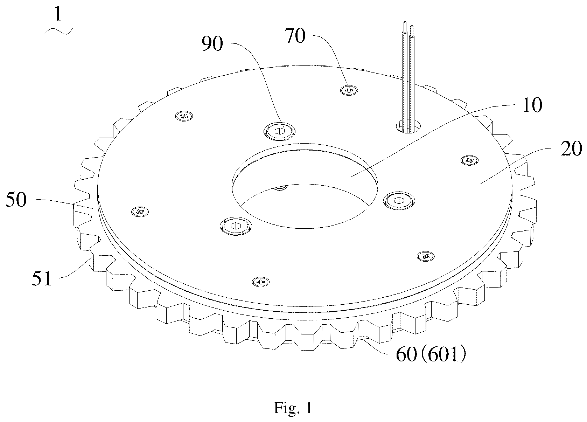

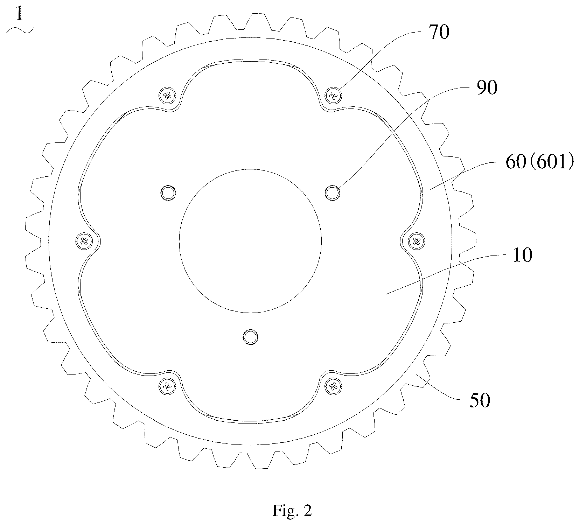

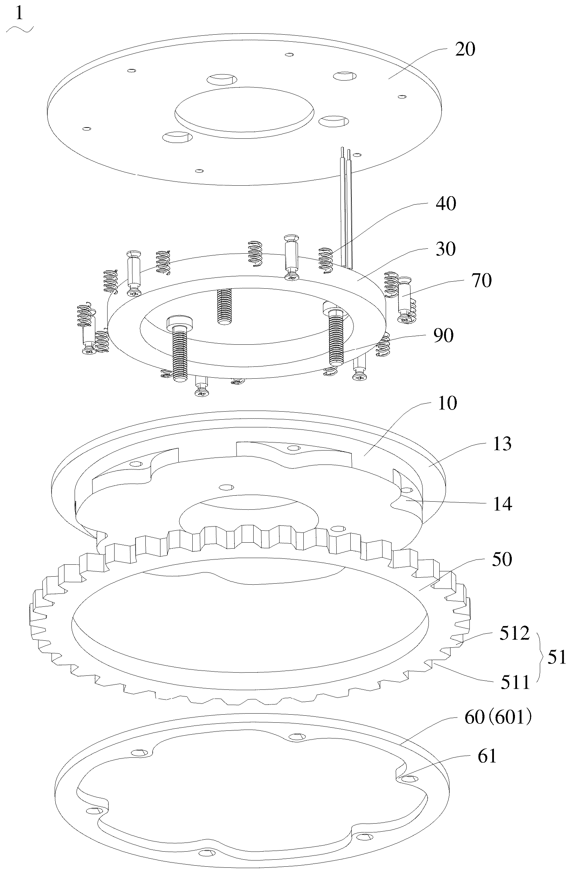

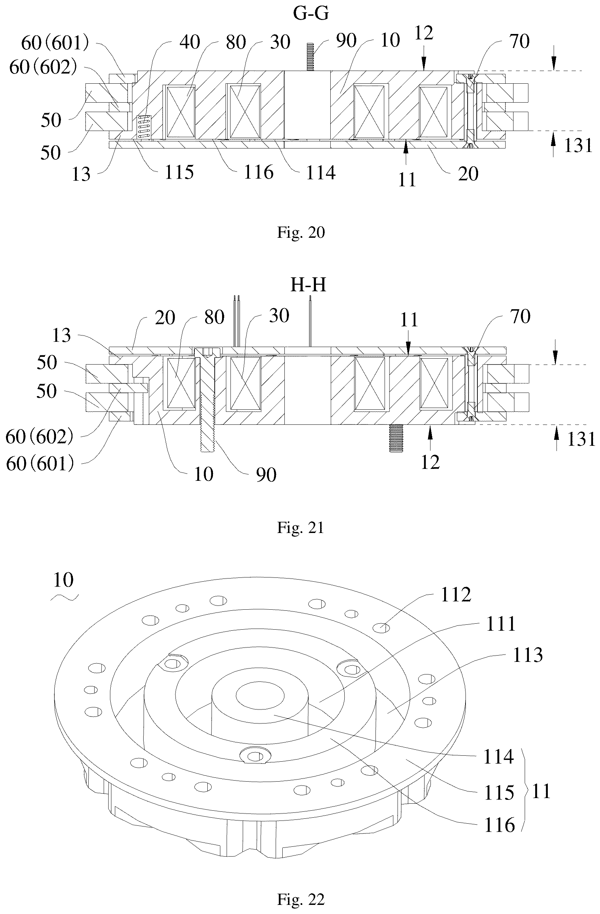

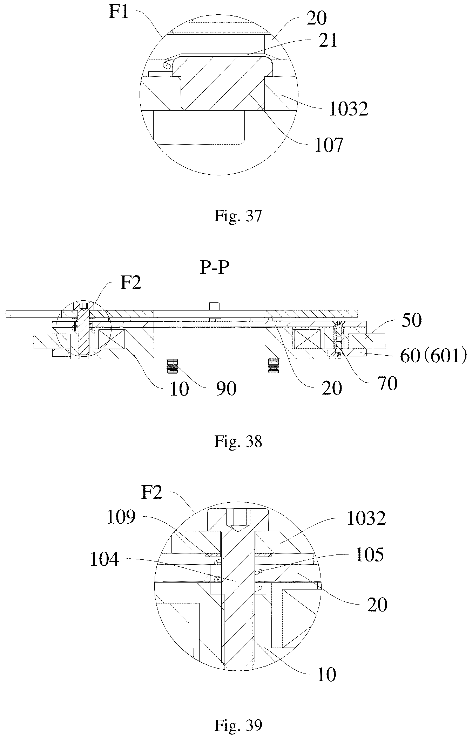

Please refer to Figs. 1 to 49 collectively, and a description of a novel brake 1 provided in the embodiments of the present application is now given.

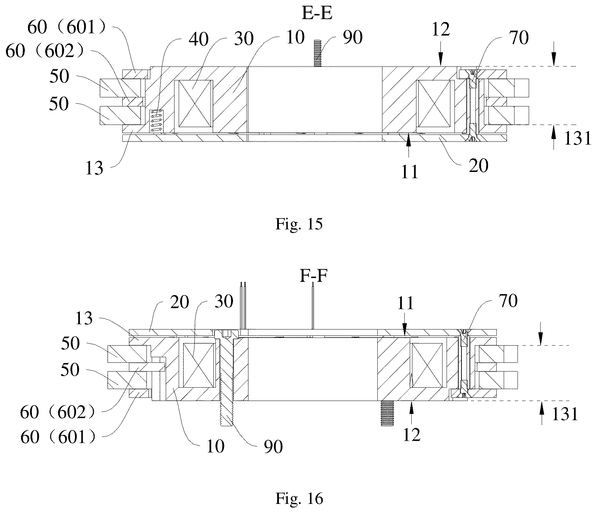

Please refer to Figs. 1 to 8, an embodiment of the present application provides a novel brake 1, including: a braking stator 10, having a first end face 11 and a second end face 12 in an axial direction, wherein the first end face 11 is provided with a first groove 111 and a second groove 112, and an outer circumference of the braking stator 10 is provided with a limit step 13, the limit step 13 forming a limit space 131 facing the second end face 12 on the outer circumference of the braking stator 10; an armature 20, arranged adjacent to the first end face 11; a main coil 30, arranged in the first groove 111; an elastic element 40, arranged in the second groove 112; N friction discs 50, being annular in structure, sleeved on the outer circumference of the braking stator 10 and located in the limit space 131; N movable plates 60, being annular in structure, sleeved on the outer circumference of the braking stator 10 and located in the limit space 131, wherein the N movable plates 60 and the N friction discs 50 are arranged alternately, an Nth movable plate 60 is arranged adjacent to an Nth friction disc 50, the Nth friction disc 50 abuts against the limit step 13, and N is an integer greater than or equal to 1; and an assembly element 70, fixedly connected with the armature 20 and a first movable plate 60 of the N movable plates 60, the first movable plate 60 being farthest from the limit step 13 among the N movable plates 60. It can be defined that, as shown in Figs. 15 and 16, the N movable plates 60 include one outer movable plate 601 and N-1 middle movable plates 602. The first movable plate 60 is defined as the outer movable plate 601, and the remaining movable plates 60 are defined as the N-1 middle movable plates 602. In other accompanying drawings, where only the first movable plate 60 is present, it may also be labeled as the outer movable plate 601.

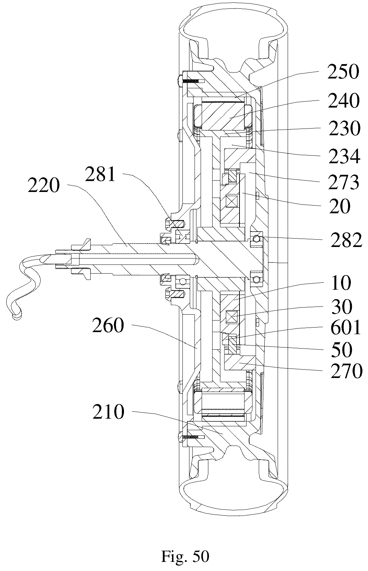

Wherein, when the main coil 30 is energized which generates a magnetic field, the armature 20 is caused to move toward the braking stator 10 against an elastic force of the elastic element 40, and the armature 20 drives the first movable plate 60 to move away from the N friction discs 50, so as to release the N friction discs 50; and outer circumferential dimensions of the N friction discs 50 are larger than outer circumferential dimensions of the N movable plates 60, and outer circumferences of the N friction discs 50 are each provided with a matching part 51 configured to be adapted to a braking part of a target device 2. The matching part 51 can rotate with the braking part and is capable of moving axially relative to the braking part. For example, when the target device 2 is the hub motor as shown in Figs. 50 to 53, the matching part 51 is adapted to the braking part 270.

Specifically, the braking stator 10 may be an annular structure, i.e., it has a central hole around the central axis. The braking stator 10 is provided with a first end face 11 and a second end face 12 that are oppositely arranged in the axial direction. A first groove 111 for mounting the main coil 30 is formed on the first end face 11. The first end face 11 is divided into an inner magnetic pole face 114 and an outer magnetic pole face 115. In the radial direction, the inner magnetic pole face 114 is located on the inner side of the main coil 30, and the outer magnetic pole face 115 is located on the outer side of the main coil 30.

The armature 20 may also be an annular structure, i.e., it has a central hole around the central axis. The armature 20 and the first movable plate 60 are fixed together by one or more assembly elements 70. The armature 20 is arranged adjacent to the first end face 11, and a corresponding face is formed in the area corresponding to the opening of the first groove 111. The corresponding face and the first groove 111 form a mounting space for accommodating the main coil 30. Both the shape of the mounting space and the shape of the main coil 30 can be adjusted and matched according to actual design requirements. For example, the cross-sectional shape of the mounting space may be regular or irregular shapes such as rectangle, right trapezoid, isosceles trapezoid, ordinary trapezoid, pentagon, hexagon, etc. Correspondingly, the cross-sectional shape of the main coil 30 may also be regular or irregular shapes such as rectangle, right trapezoid, isosceles trapezoid, ordinary trapezoid, pentagon, hexagon, etc. Of course, the cross-sectional shape of the main coil 30 may also be different from that of the mounting space, which is not limited herein. To improve the uniformity and consistency of the magnetic induction intensity on the inner side and the outer side of the main coil 30, the axial width of the mounting space may be set to increase in the direction away from the axis of the braking stator 10.

A second groove 112 for accommodating the elastic element 40 is further formed on the first end face 11. The elastic element 40 is configured to provide an axial elastic force that pushes the armature 20 away from the braking stator 10. The number of the elastic element 40 is consistent with that of the second groove 112, and the elastic element 40 and the second groove 112 may be one or more. When multiple elastic elements 40 and multiple second grooves 112 are provided, they are evenly distributed around the central axis of the braking stator 10. The second grooves 112 may be arranged on the inner magnetic pole face 114 or the outer magnetic pole face 115, which is not limited herein. Where the width of the inner magnetic pole face 114 may increase toward the central hole, which prevents the inner magnetic pole magnetic circuit from being easily saturated and results in a stronger magnetic force. When the elastic elements 40 are disposed within the coverage area of the inner magnetic pole face 114, the width of the inner magnetic pole face 114 can be increased toward the central hole without reducing the magnetic force. Alternatively, the multiple elastic elements 40 and the multiple second grooves 112 may be non-uniformly distributed around the central axis of the braking stator 10.

It should be understood that the braking stator 10 may also be referred to as a housing, casing, magnetic yoke, magnetic yoke iron core, or other technical terms commonly used in the art. The braking stator 10 itself is not magnetic; when the main coil 30 is energized, the braking stator 10 is magnetized to generate magnetism, and when the main coil 30 is de-energized, the magnetism of the braking stator 10 disappears. The novel brake 1 achieves the braking effect mainly through the coordinated operation of the braking stator 10, main coil 30, armature 20, friction disc 50, elastic element 40, movable plate 60, and other components. Specifically, when the main coil 30 is energized, a magnetic field is generated around its outer circumference, and an attractive magnetic force is produced in the gap between the braking stator 10 and the armature 20.

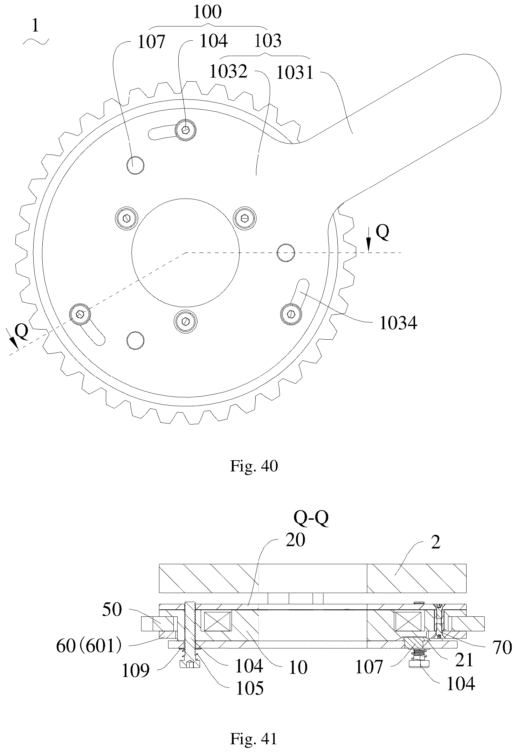

Please refer to Figs. 40 to 43 and Figs. 46 to 49, which illustrate the schematic diagrams of the novel brake 1 when installed on the target device 2. The target device 2 includes a mounting surface and a braking part; the braking part is rotatable relative to the mounting surface and can drive the friction discs 50 to rotate together. The number of friction discs 50 and movable plates 60 is N, where N is an integer greater than or equal to 1. Specifically, in some embodiments, as shown in Figs. 1 to 13, one friction disc 50 and one movable plate 60 are provided; one side of the friction disc 50 is in contact with the movable plate 60, and the other side is in contact with the limit step 13; the movable plate 60 is fixedly connected with the armature 20 via the assembly element 70. After being installed on the target device 2, the mounting element 90 is locked into the mounting surface, and the friction disc 50 is structurally adapted to the braking part (not shown in the figures) of the target device 2 through the matching part 51. When there is no need to brake the target device 2, the main coil 30 generates a magnetic field when energized, causing the armature 20 to overcome the elastic force of the elastic element 40 and move toward the braking stator 10. Meanwhile, the armature 20 drives the movable plate 60 to move away from the friction disc 50, thereby releasing the compression of the movable plate 60 on the friction disc 50, and the friction disc 50 rotates together with the target device 2 via the matching part 51. When braking of the target device 2 is required, the main coil 30 is de-energized. Under the elastic force of the elastic element 40, the armature 20 moves away from the braking stator 10 and drives the movable plate 60 to move toward the first end face 11, thereby achieving the compression of the movable plate 60 on the friction disc 50. Both end faces of the friction disc 50 are frictionally braked against the movable plate 60 and the limit step 13 respectively, and the friction disc 50 prevents the rotation of the target device 2 via the matching part 51. The diameter of the outer circumference of the braking stator 10 corresponding to the central hole of the friction disc 50 is equal to the diameter of the outer circumference of the braking stator 10 corresponding to the central hole of the movable plate 60. Alternatively, the diameter of the outer circumference of the braking stator 10 corresponding to the central hole of the friction disc 50 may be larger than that corresponding to the central hole of the movable plate 60.

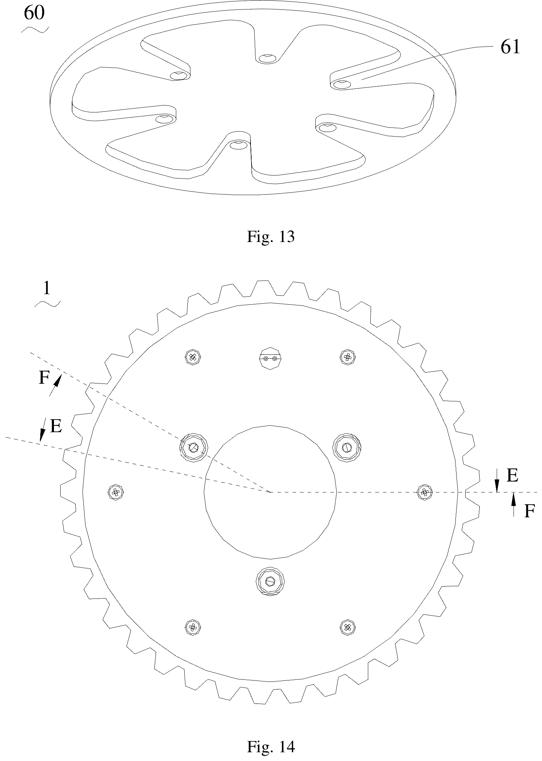

In some other embodiments, as shown in Figs. 14 to 25, a plurality of friction discs 50 and a plurality of movable plates 60 are provided, and the multiple friction discs 50 and the multiple movable plates 60 are arranged alternately. One side of the Nth friction disc 50 is in contact with the Nth movable plate 60, and the other side is in contact with the limit step 13. The first movable plate 60 is the one farthest from the armature 20, and is fixedly connected with the armature 20 via the assembly element 70, while the remaining movable plates 60 have no connection with the armature 20. The N friction discs 50 and the remaining movable plates 60 are alternately arranged between the first movable plate 60 and the limit step 13. After the novel brake 1 is mounted on the target device 2, each of the N friction discs 50 is structurally adapted to the braking part of the target device 2 through its respective matching part 51. When there is no need to brake the target device 2, the main coil 30 generates a magnetic field when energized, causing the armature 20 to overcome the elastic force of the elastic element 40 and move toward the braking stator 10. Meanwhile, the armature 20 drives the first movable plate 60 to move away from the N friction discs 50, increasing the distance between the first movable plate 60 and the limit step 13, thereby releasing the compression of the N movable plates 60 on the N friction discs 50, and the N friction discs 50 rotate together with the target device 2 via the N matching parts 51. When braking of the target device 2 is required, the main coil 30 is de-energized. Under the elastic force of the elastic element 40, the armature 20 moves away from the braking stator 10 and drives the first movable plate 60 to move toward the first end face 11, reducing the distance between the first movable plate 60 and the limit step 13. The compression force is transmitted from the first movable plate 60 to each friction disc 50 and the remaining movable plates 60, thereby achieving the compression of the N movable plates 60 on the N friction discs 50. Both end faces of each friction disc 50 are frictionally braked against the movable plates 60 or the limit step 13, and the N friction discs 50 prevent the rotation of the target device 2 via the N matching parts 51.

In this embodiment, when one friction disc 50 and one movable plate 60 are provided, the friction disc 50 achieves the compression effect by virtue of the movable plate 60 and the limit step 13; when a plurality of friction discs 50 and a plurality of movable plates 60 are provided, the multiple friction discs 50 achieve the compression effect by virtue of the adjacent movable plates 60 and the limit step 13; and the braking effect is realized through the double-sided friction of each friction disc 50.

It should be noted that the outer circumference dimension of each friction disc 50 is larger than that of each movable plate 60. With such an arrangement, the friction area where the friction disc 50 is in contact with the movable plate 60 is located inside the matching part 51, and the outer diameter of the friction area depends on the outer diameter of the movable plate 60 and the outer diameter of the limit step 13. The stress and strain generated when the matching part 51 is subjected to force will be smaller, which can improve the service life of the friction disc 50. During the production process of the friction disc 50, it is easier to control the geometric tolerances of the plane where the friction area is located relative to the central axis, facilitating manufacturing and making it easier to achieve a high qualified rate.

In this embodiment, the friction disc 50 is adapted to the braking part of the target device 2 via the matching part 51 on its outer circumference. With such an arrangement, the diameters of the central holes of the braking stator 10 and the armature 20 can be made smaller, which are no longer restricted by the size of the braking shaft of the target device 2, and there is no need to configure a shaft sleeve, allowing the shapes of the central holes to be more diversified. When the diameter of the central hole of the braking stator 10 is smaller, the main coil 30 can be expanded radially toward the central hole, and both the inner and outer diameters of the main coil 30 can be reduced. When both the inner and outer diameters of the main coil 30 are reduced, with the coil thickness, coil resistance and coil current kept unchanged, the main coil 30 can have a larger number of turns. A higher number of ampere-turns results in a stronger magnetic field, making the coil power easier to control and increasing the coil energy.

The novel brake 1 provided in the embodiment of the present application has at least the following technical effects: compared with the conventional technology, in the novel brake 1 provided in the embodiment of the present application, the N friction discs 50 and the N movable plates 60 are all sleeved on the outer circumference of the braking stator 10; the thickness of the novel brake 1 only depends on the thickness of the braking stator 10 and the thickness of the armature 20, which greatly reduces the total thickness of the novel brake 1; instead of being fitted with the shaft sleeve and the braking shaft through the central hole, the friction discs 50 are directly matched with the braking part of the target device 2 through the matching parts 51 arranged on the outer circumferences, which allows the novel brake 1 to be applied to a wider range of application scenarios, and the dimensions of the braking stator 10 and the armature 20 can be designed more freely; the overall volume of the novel brake 1 can be further reduced by reducing the inner and outer diameters of the braking stator 10; when the dimension of the central hole of the braking stator 10 is smaller, the inner diameter of the main coil 30 can be reduced, which in turn can decrease the outer diameter of the main coil 30; decreasing the inner and outer diameters of the braking stator 10, with the coil thickness, the coil resistance and the coil current kept unchanged, the main coil 30 can have more turns, which can increase the ampere-turns under the same power, enhance the magnetic force and increase the braking torque; meanwhile, compared with conventional technologies, in the novel brake 1 provided in the embodiment of the present application, both the inner and outer diameters of the friction areas of the friction discs 50 are larger, which in turn increases the friction area and friction radius, thereby increasing the torque of the novel brake 1; the friction radius depends on the inner and outer diameters of the friction area and is proportional to the torque of the novel brake 1; which also reduce the mass of the friction discs 50, lessen the impact on the total inertia of the target device 2, and improve the start-stop sensitivity of the target device 2, thus ensuring the braking effect without increasing the thickness of the novel brake 1; the movable plates 60 have lower precision requirements and lower production costs than the friction discs 50, since the friction discs 50 rub against the movable plates 60 instead of the armature 20, only the movable plates 60 need to be replaced after long-term use, resulting in low replacement costs; in addition, dust generated in the friction area where the friction discs 50 and the movable plates 60 contact is not easy to enter the interior of the novel brake 1, which avoids malfunctions of internal components caused by dust; the radial dimension of the matching part 51 is larger than that of the friction area, making it easier to control the geometric tolerances of the plane where the friction area is located relative to the central axis during the production process, thus facilitating manufacturing and achieving a higher qualified rate; when the matching part 51 is subjected to force, the generated stress and strain are smaller, which can improve the service life of the friction disc 50.

The structure of the matching part 51 is illustrated with examples below, but is not limited to the following embodiments.

Please refer to Figs. 1 to 5 and Fig. 8, in some embodiments, the matching part 51 includes one radially extending matching protrusion; or the matching part 51 includes a plurality of radially extending matching protrusions 512, with a matching groove 511 formed between every two adjacent matching protrusions 512; or the matching part 51 is a plurality of matching grooves or a plurality of matching holes; and when N is greater than 1, the N matching parts 51 of the N friction discs 50 have same shapes generally; alternatively, they may have shapes different from one another or have shapes some of which are not same. It should be understood that the aforementioned radially extending refers to the protruding direction of the matching protrusions 512 extending along the radial direction.

When the matching part 51 includes a single matching protrusion, the matching protrusion can be regarded as a key, and in this case, the braking part of the target device 2 can be a keyway adapted to the key.

When the matching part 51 includes a plurality of matching protrusions 512, a matching groove 511 is formed between every two adjacent matching protrusions 512, and the multiple matching grooves 511 and the multiple matching protrusions 512 are arranged alternately. When there is no need to brake the target device 2, the N movable plates 60 have a certain axial movement distance; correspondingly, the N friction discs 50 should also have a certain axial movement distance, that is, to ensure that each friction disc 50 can be subjected to the compression force of the movable plates 60. For this purpose, both the matching grooves 511 and the matching protrusions 512 included in the matching part 51 extend radially, which ensures the axial freedom of the friction discs 50, thus enabling the N movable plates 60 to compress the N friction discs 50 more reliably.

No specific limitation is imposed on the cross-sectional shapes of the matching grooves 511 and matching protrusions 512, which can be regular or irregular shapes such as tooth-shaped, sawtooth-shaped, rectangular, arc-shaped, polygonal, key-shaped, etc. Moreover, within the same matching part 51, the multiple matching grooves 511 and the multiple matching protrusions 512 can be of the same shape or different shapes. When N is greater than 1, the N matching parts 51 of the N friction discs 50 are generally completely identical; however, they can also be entirely different, or partially identical and partially different, which is not limited herein.

When the matching part 51 is configured as several matching grooves or several matching holes, the braking part of the target device 2 may include several cylinders adapted to the matching grooves or the matching holes, and the cylinders drive the friction discs 50 to rotate through the matching grooves or the matching holes.

The following describes the matching relationship between the N movable plates 60 and the braking stator 10, but is not limited to the following embodiments.

Please refer to Figs. 1 to 17, in some embodiments, an inner circumference of at least one of the N movable plates 60 is provided with a positioning protrusion 61; the outer circumference of the braking stator 10 is provided with a positioning groove 14 adapted to the positioning protrusion 61; and the assembly element 70 is slidably inserted through the braking stator 10, connected with the armature 20 and the first movable plate 60, and is allowed to move freely within a sliding hole of the braking stator 10. It should be understood that each movable plate 60 may be provided with one or more positioning protrusions 61; when multiple positioning protrusions 61 and multiple positioning grooves 14 are adopted, they are evenly distributed relative to the central axis, so as to ensure uniform force bearing of all components of the novel brake 1 and consistent displacement of the armature 20. The first movable plate 60 may or may not be provided with positioning protrusions 61. Since the assembly element 70 is required to connect the first movable plate 60 and the armature 20, the assembly element 70 can also play a role in limiting the position of the first movable plate 60. For the convenience of distinguishing the positioning grooves 14 at different positions, the positioning grooves 14 corresponding to the positioning protrusions 61 of the first movable plate 60 are defined as first positioning grooves 141, and the positioning grooves 14 corresponding to the positioning protrusions 61 of the remaining movable plates 60 are defined as second positioning grooves 142.

A detailed description is given below by taking the example where the first movable plate 60 is also provided with positioning protrusions 61. Since the assembly elements 70 are connected with the armature 20 and the first movable plate 60 and are slidably inserted through the braking stator 10, assembly holes are formed in the positioning protrusions 61 of the first movable plate 60, and sliding holes are formed in the braking stator 10. The assembly elements 70 can move axially within the sliding holes of the braking stator 10, serving to limit the position of the armature 20 and the first movable plate 60 in the rotational direction and guide them during axial movement.

The matching between the positioning protrusions 61 and the positioning grooves 14 can prevent the remaining movable plates 60 from rotating and also provide a certain guiding effect for the movable plates 60 during axial movement. As the multiple positioning protrusions 61 fit into the multiple positioning grooves 14 and the friction discs 50 are sleeved on the outer circumference of the braking stator 10, when the assembly elements 70 are slidably inserted through the braking stator 10 via the positioning protrusions 61 of the first movable plate 60, the friction discs 50 are sleeved on the outer circumference of the braking stator 10, there is no spatial interference between the assembly elements 70 and the friction discs 50, which does not restrict the size of the friction area formed by the friction discs 50 and the movable plates 60, allowing the torque of the novel brake 1 to be increased by expanding the inner and outer diameters of the friction area of the friction discs 50. Thus, the installation positions and methods of the assembly elements 70 are more flexible.

It should be noted that when N=1, the first movable plate 60 is provided with a plurality of positioning protrusions 61, and the braking stator 10 is provided with a plurality of first positioning grooves 14 adapted to the positioning protrusions 61. The thickness of the friction disc 50 is greater than the distance from the limit step 13 to the bottom of the first positioning groove 141, and the axial depth of the first positioning groove 141 is greater than the thickness of the first movable plate 60. When N>1, the shapes of the positioning protrusions 61 of the first movable plate 60 and those of the remaining movable plates 60 may be the same or different. The shapes of the positioning protrusions 61 of the multiple remaining movable plates 60 are generally the same, but may also be different, which is not specifically limited herein. The total thickness of the N friction discs 50 and the N-1 remaining movable plates 60 is greater than the distance from the limit step 13 to the bottom of the first positioning groove 141. The first movable plate 60 is arranged adjacent to the first friction disc 50, and the first friction disc 50 is arranged to protrude beyond the bottom of the first positioning groove 141, thereby ensuring that the first movable plate 60 can be in contact with the first friction disc 50.

In some embodiments, the positioning protrusions 61 of the multiple remaining movable plates 60 have different shapes. The positioning protrusions 61 of the remaining movable plates 60 that are closer to the limit step 13 have a smaller area, and the projection of the positioning protrusions 61 of the remaining movable plates 60 closer to the limit step 13 falls within the axial projection of the positioning protrusions 61 of the remaining movable plates 60 farther from the limit step 13. Correspondingly, the braking stator 10 is provided with a plurality of stepped second positioning grooves 142 adapted thereto.

In some specific embodiments, as shown in Figs. 14 to 18, when N>1, all the N movable plates 60 are provided with positioning protrusions 61. A detailed description is given below by taking the example where each movable plate 60 is provided with a plurality of positioning protrusions 61. The multiple positioning protrusions 61 of the first movable plate 60 are arranged in a staggered manner relative to those of the remaining movable plates 60 of the N movable plates 60 in the circumferential direction of the braking stator 10, while the multiple positioning protrusions 61 of different remaining movable plates 60 are aligned at the same positions in the circumferential direction of the braking stator 10. That is to say, the axial projections of the multiple positioning protrusions 61 of the first movable plate 60 and those of the remaining movable plates 60 do not overlap. A preset distance is maintained between the multiple assembly elements 70 and the multiple positioning protrusions 61 of the remaining movable plates 60, so that no interference is generated between the assembly elements 70 and the positioning protrusions 61 of the remaining movable plates 60.

In some specific embodiments, when space permits, the positioning protrusions 61 of the different remaining movable plates 60 are located at different positions in the circumferential direction relative to the braking stator 10. That is to say, the positioning protrusions 61 of each movable plate 60 are arranged in a staggered manner.

The assembly elements 70 are inserted through the positioning protrusions 61 of the first movable plate 60 without spatial interference with the positioning protrusions 61 of the remaining movable plates 60. In other words, a preset distance is maintained between the assembly elements 70 and the positioning protrusions 61 of the remaining movable plates 60 to ensure that the assembly elements 70 only serve to achieve the fixed connection between the first movable plate 60 and the armature 20, and prevents spatial interference between the assembly elements 70 and the remaining movable plates 60.

To ensure that each movable plate 60 has a sufficient axial movement distance, the positioning grooves 14 corresponding to the positioning protrusions 61 of the first movable plate 60 are defined as the first positioning grooves 141, and the positioning grooves 14 corresponding to the positioning protrusions 61 of the remaining movable plates 60 are defined as the second positioning grooves 142. The positioning protrusions 61 of the remaining movable plates 60 are disposed within the second positioning grooves 142. Both the first positioning grooves 141 and the second positioning grooves 142 extend from the second end face 12 toward the first end face 11. The axial depth of the first positioning grooves 141 is smaller than that of the second positioning grooves 142, and the axial depth of the first positioning grooves 141 is greater than the thickness of the first movable plate 60. The total thickness of the N friction discs 50 and the N-1 remaining movable plates 60 is greater than the distance from the limit step 13 to the bottom of the first positioning grooves 141, and the first friction disc 50 is arranged to protrude beyond the bottom of the first positioning grooves 141, thereby ensuring that the first movable plate 60 can come into contact with the adjacent friction disc 50.

In other words, all the positioning grooves 14 are recessed from the second end face 12 toward the first end face 11, ensuring that the remaining movable plates 60 have appropriate axial movement distances. The axial depth of all positioning grooves 14 is designed according to the axial positions of the multiple movable plates 60 when they compress the multiple friction discs 50. The axial gap between the armature 20 and the braking stator 10 can be adjusted by using assembly elements 70 of different lengths.

Of course, in other embodiments, when N>1, the multiple positioning protrusions 61 of the first movable plate 60 may also be aligned with those of the remaining movable plates 60 of the N movable plates 60 in the circumferential direction of the braking stator 10, and the multiple assembly elements 70 are slidably inserted through the multiple positioning protrusions 61 of the remaining movable plates 60. Wherein, the axial projections of the positioning protrusions 61 of the remaining movable plates 60 are located within the axial projections of the positioning protrusions 61 of the first movable plate 60, and a preset distance is maintained between the assembly elements 70 and the positioning protrusions 61 of the remaining movable plates 60. It should be understood that when the positioning protrusions 61 of all movable plates 60 are aligned in the circumferential direction of the braking stator 10, the shapes of the positioning protrusions 61 of different movable plates 60 may be the same or different; correspondingly, a single positioning groove 14 may be shared, or multiple stepped positioning grooves 14 that are not shared may be adopted instead.

In this embodiment, to ensure that the assembly elements 70 are not affected by the spatial position of the remaining movable plates 60, the assembly elements 70 need to be slidably inserted through the positioning protrusions 61 of the remaining movable plates 60 to ensure that the assembly elements 70 only serve to achieve the fixed connection between the first movable plate 60 and the armature 20, and prevents spatial interference between the assembly elements 70 and the remaining movable plates 60.

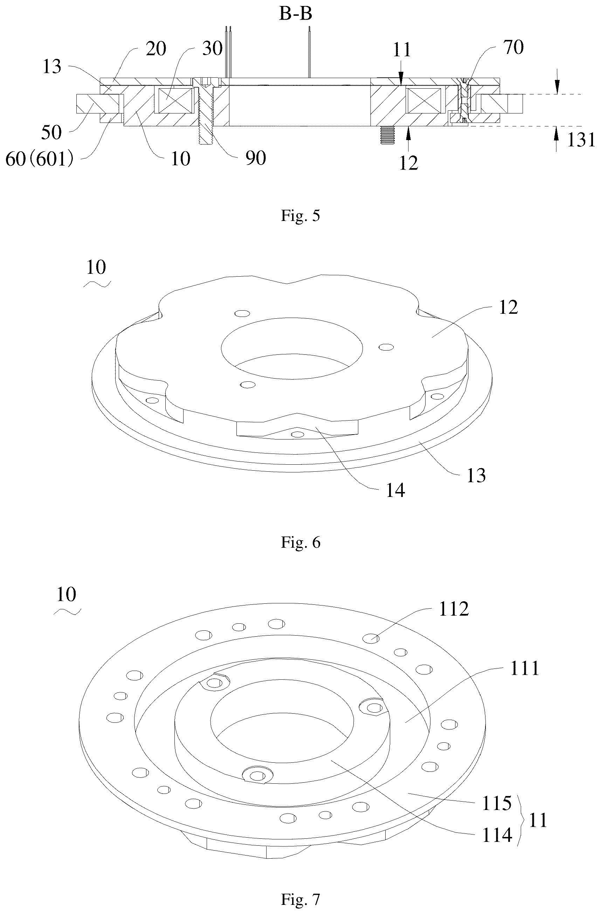

Please refer to Figs. 6 to 8, Fig. 13, Fig. 17 and Fig. 18, in some embodiments, a surface of each positioning protrusion 61 includes a first arc surface, and a surface of each positioning groove 14 includes a second arc surface adapted to the first arc surface. In this embodiment, there may be one or more first arc surfaces, where multiple first arc surfaces are smoothly connected to one another, and multiple second arc surfaces are also smoothly connected to one another. This ensures the smoothness of the remaining movable plates 60 during axial movement and reduces scratch damage during the movement process. In addition, it also facilitates error-proofing during the assembly of the novel brake 1, enabling operators to directly and correctly complete the assembly without requiring attention, experience or professional knowledge, thus simplifying the installation process.

In the above embodiments, the aforementioned staggered arrangement and aligned arrangement are referenced to the center line rather than the overall contour.

Besides the above embodiments, the novel brake 1 may also be subject to other structural improvements, which are illustrated by examples below.

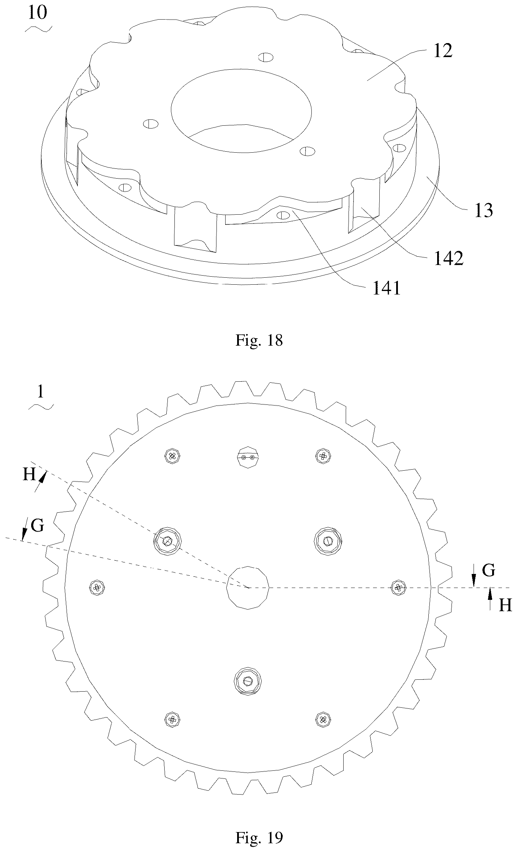

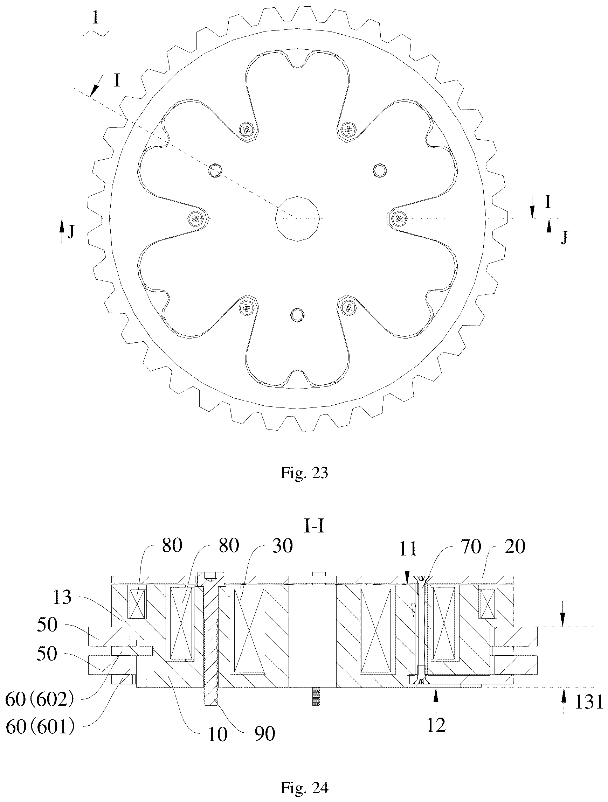

Please refer to Figs. 19 to 25, in some embodiments, the first end face 11 is further provided with at least one third groove 113, which is arranged on an inner side or an outer side of the first groove 111; and the novel brake 1 further includes at least one secondary coil 80 arranged in the at least one third groove 113. In this embodiment, the secondary coil 80 may be disposed on the inner side or the outer side of the main coil 30, and the number and positions of the third grooves 113 are determined according to the number and positions of the secondary coils 80. Since the novel brake 1 includes the main coil 30 and the secondary coil 80, the first end face 11 is divided into an inner magnetic pole face 114, a middle magnetic pole face 116 and an outer magnetic pole face 115. The part arranged around the inner circumference is the inner magnetic pole face 114, the part arranged around the outer circumference is the outer magnetic pole face 115, and the part located between two adjacent coils is the middle magnetic pole face 116. The number of the middle magnetic pole faces 116 is adaptively adjusted according to the number of the secondary coils 80. As shown in Figs. 19 to 22, one secondary coil 80 is provided and arranged on the outer side of the main coil 30. As shown in Figs. 23 to 25, two secondary coils 80 are provided and both are arranged on the outer side of the main coil 30, with the outermost secondary coil 80 disposed within the range of the limit step 13. In this case, the limit step 13 has a relatively large axial thickness.

The main coil 30 and the secondary coil 80 can be connected in series, with power on/off controlled by a single control switch. In this case, since the novel brake 1 requires a high voltage for attraction and a low voltage for holding, being configured to reduce energy consumption and heat generation of the novel brake 1, so it is necessary to configure a control switch capable of adjusting voltage levels. The main coil 30 and the secondary coil 80 can also be connected in parallel, with their power on/off controlled by separate control switches. In this case, to achieve the effect of high voltage for attraction and low voltage for holding, both the main coil 30 and the secondary coil 80 can be energized simultaneously during the attraction phase. During the holding phase, either the main coil 30 can remain energized while the secondary coil 80 is de-energized, or the main coil 30 can be de-energized while the secondary coil 80 remains energized. This eliminates the need for a voltage-adjustable control switch, thereby reducing the manufacturing cost of the novel brake 1.

In this embodiment, the coexistence of the main coil 30 and the secondary coil 80 can enhance the magnetic force. This enables the novel brake 1 to achieve a higher torque under the same outer diameter and thickness constraints, expanding its range of application scenarios.

Please refer to Figs. 1 to 49, in some embodiments, the novel brake 1 further includes a mounting element 90; the mounting element 90 and the assembly element 70 are independent of each other; and the mounting element 90 is adapted to the braking stator 10, avoids the armature 20, and is slidably fitted with the braking stator 10, with a locking end of the mounting element 90 selectively extending from the first end face 11 or the second end face 12. It should be understood that both the braking stator 10 and the armature 20 are provided with mounting holes, and the number of mounting elements 90 can be one or more. In this embodiment, the novel brake 1 is fixedly connected to the target device 2 via the locking end of the mounting element 90. In other embodiments, the novel brake 1 can also be fixedly connected to the target device 2 by means of bonding, clamping, welding, etc. Furthermore, a fixing structure adapted to the target device 2 can be provided in the central hole of the braking stator 10. Therefore, the mounting element 90 is not mandatory but merely a preferred embodiment.

The following describes the arrangement modes of the mounting elements 90 and the assembly elements 70 with examples, but is not limited to the following embodiments.

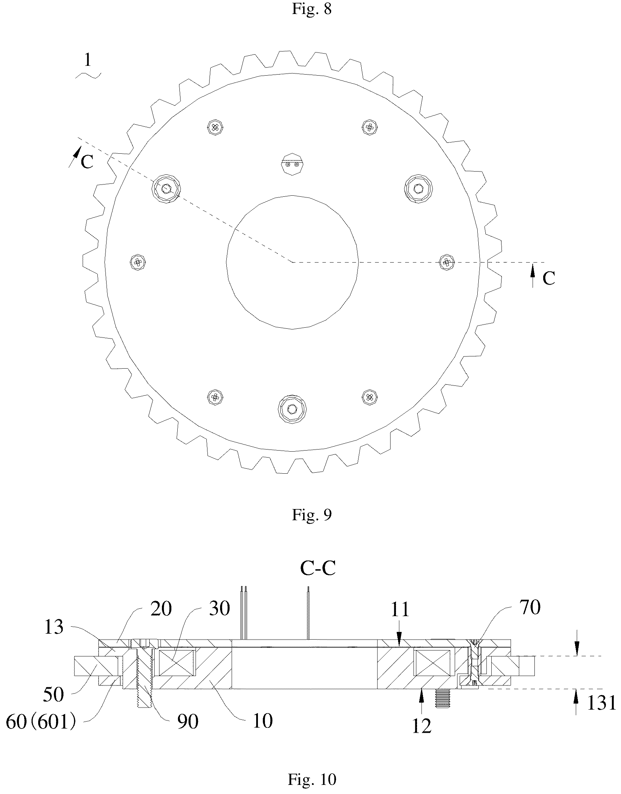

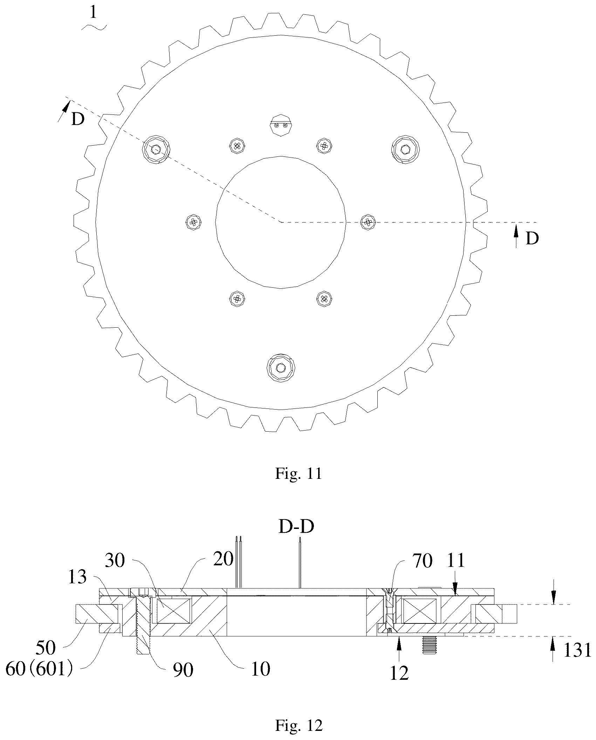

In some embodiments, when the novel brake 1 only includes the main coil 30, the mounting elements 90 may be arranged within the range covered by the inner magnetic pole face 114 or within the range covered by the outer magnetic pole face 115; the assembly elements 70 may also be arranged within the range covered by the inner magnetic pole face 114 or within the range covered by the outer magnetic pole face 115. The mounting elements 90 and the assembly elements 70 can be located within the same range or different ranges. Furthermore, when the position of the assembly elements 70 is changed, the position and shape of the positioning protrusions 61 of the first movable plate 60 shall be adjusted adaptively. As shown in Figs. 1 to 8, the mounting elements 90 are arranged within the range covered by the inner magnetic pole face 114, and the assembly elements 70 are arranged within the range covered by the outer magnetic pole face 115. As shown in Figs. 9 and 10, both the mounting elements 90 and the assembly elements 70 are arranged within the range covered by the outer magnetic pole face 115. As shown in Figs. 11 to 13, the mounting elements 90 are arranged within the range covered by the outer magnetic pole face 115, and the assembly elements 70 are arranged within the range covered by the inner magnetic pole face 114.

In other embodiments, when the novel brake 1 includes both the main coil 30 and the secondary coil 80, the mounting elements 90 may be arranged within the range covered by the inner magnetic pole face 114, within the range covered by the middle magnetic pole face 116, or within the range covered by the outer magnetic pole face 115; the assembly elements 70 may also be arranged within the range covered by the inner magnetic pole face 114, within the range covered by the middle magnetic pole face 116, or within the range covered by the outer magnetic pole face 115. The mounting elements 90 and the assembly elements 70 can be located within the same range or different ranges. Furthermore, when the position of the assembly elements 70 is changed, the position and shape of the positioning protrusions 61 of the first movable plate 60 shall be adjusted adaptively.

In addition, the mounting elements 90 and the assembly elements 70 may also be arranged outside the range covered by the magnetic pole faces. For example, a radially extending step may be provided at the edge of the central hole of the braking stator 10, and the mounting elements 90 and the assembly elements 70 are arranged on this step.

On the basis of the above embodiments, the mounting elements 90 are adapted to the braking stator 10 and are configured to fix the novel brake 1 to the target device 2 requiring braking. Specifically, the mounting elements 90 may be configured as screws, bolts, studs, weldments, clamping members, pins, rivets, expansion members, cable ties, or other structures, which is not limited herein. The connecting parts of the mounting elements 90 may be treated by means such as pre coating glue, using self-locking threads, installing gaskets, embedding nylon rings or blocks, installing stop washers, breaking some threads, using mounting elements 90 with flange faces to prevent loosening of the mounting elements 90.

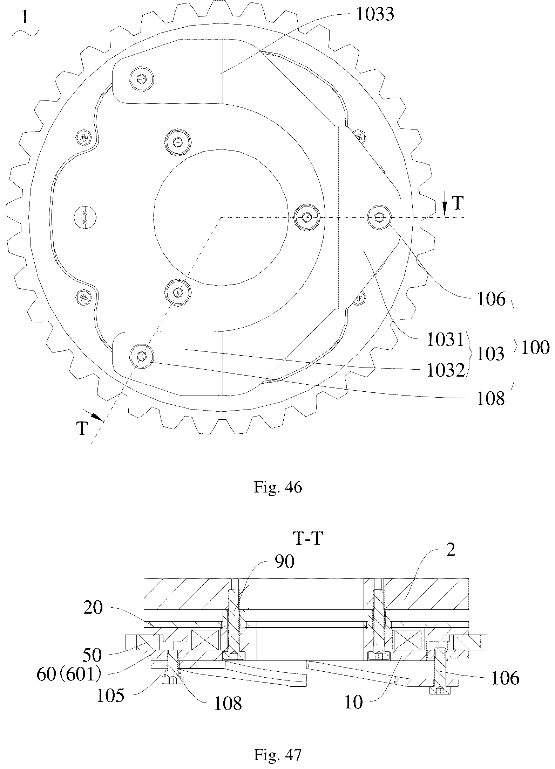

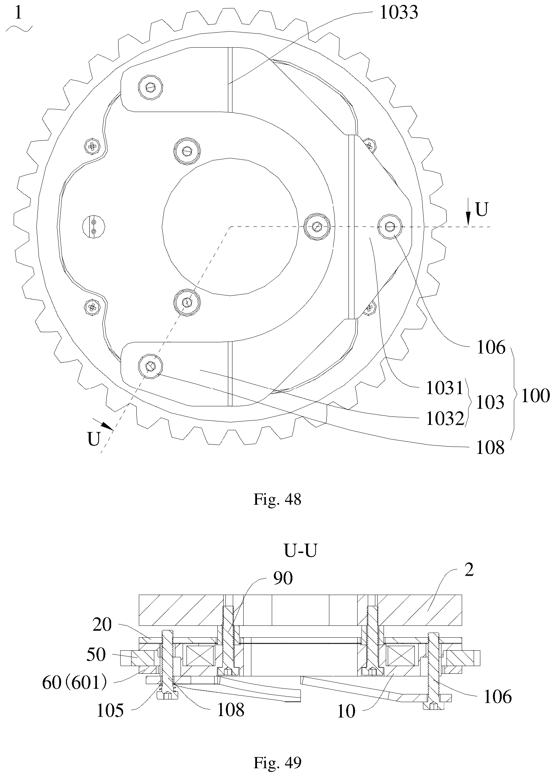

For example, as shown in Figs. 47 and 49, each mounting element 90 includes a supporting member and a bolt; the braking stator 10 is provided with a countersunk mounting hole, and the supporting member is sleeved onto the bolt; the armature 20 is provided with an avoidance space for the bolt and the supporting member; and the bolt is inserted through the mounting hole and screwed into the target device 2, and the supporting member is disposed between the braking stator 10 and the target device 2 through the avoidance space. By adjusting the axial length of the supporting member, the distance between the novel brake 1 and the target device 2 can be adjusted. This ensures that the armature 20 does not come into contact with either the mounting element 90 or the target device 2 during axial movement, and also play a role in supporting the novel brake 1.

The assembly elements 70 serve to connect the armature 20 and the first movable plate 60 together. The braking stator 10 and the remaining movable plates 60 are provided with avoidance spaces reserved for the assembly elements 70. The assembly elements 70 can be arranged as separate components from the armature 20 and the first movable plate 60, and may specifically be configured as assembly structures such as screws, bolts, studs, weldments, clamping members, pins, rivets, expansion members, or cable ties. Of course, the assembly elements 70 may also be integrally formed with the armature 20 and then fixedly connected with the first movable plate 60; alternatively, the assembly elements 70 may be integrally formed with the first movable plate 60 and then fixedly connected with the armature 20, which is not limited herein. The connecting parts of the assembly elements 70 may be treated by means such as pre coating glue, using self-locking threads, installing gaskets, embedding nylon rings or blocks, installing stop washers, breaking some threads, using assembly elements 70 with flange faces to prevent loosening of the assembly elements 70.

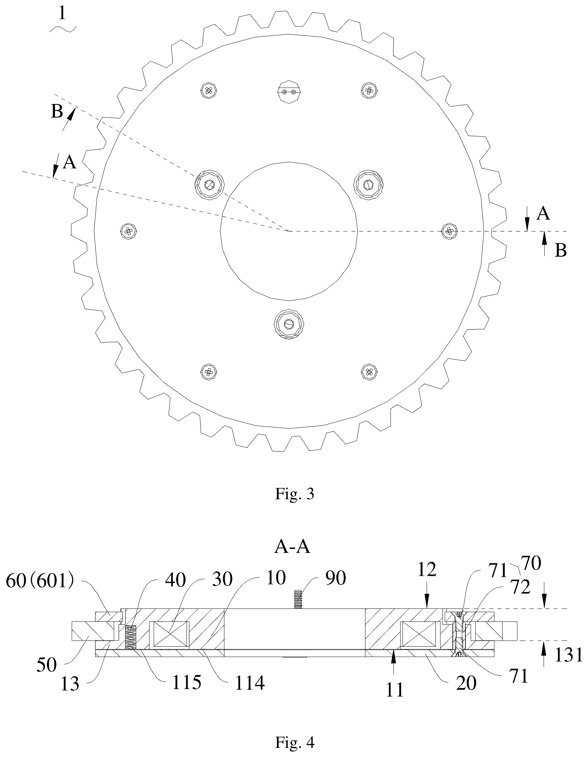

For example, as shown in Fig. 4, each assembly element 70 includes two assembly screws 71 and one guide post 72; the first movable plate 60 and the armature 20 are provided with tapered countersunk holes, into which the two assembly screws 71 are inserted from opposite directions; and the tail ends of the two assembly screws 71 are threadedly connected with the guide post 72. The guide post 72 is an annular structure, and the outer diameter of the guide post 72 is smaller than the diameter of the corresponding through hole on the braking stator 10. Glue is filled between the two assembly screws 71 and the guide post 72 to prevent loosening. The cross-sectional shape of the guide post 72 may be circular with a central hole, elliptical, polygonal, or irregular, which is not limited herein. Correspondingly, the shape of the through hole on the braking stator 10 adapted to the guide post 72 may also be circular, elliptical, polygonal, or irregular, which is not limited herein.

As another example, each assembly element 70 includes one assembly screw and one guide post; the armature 20 is provided with a countersunk hole, into which the assembly screw is inserted; and the guide post is sleeved onto the outer circumference of the assembly screw, and the tail end of the assembly screw is threadedly connected with the first movable plate 60. The guide post is an annular structure, with its outer diameter smaller than the diameter of the corresponding through hole on the braking stator 10. Glue is filled between the tail end of the assembly screw and the first movable plate 60 to prevent loosening.

In this embodiment, since the friction discs 50 are sleeved on the outer circumference of the braking stator 10, and the positioning protrusions 61 of the movable plates 60 are matched with the positioning grooves 14 of the braking stator 10, neither the mounting elements 90 nor the assembly elements 70 will interfere with the friction discs 50, nor will they restrict the size of the friction areas formed by the friction discs 50 and the movable plates 60. Compared with brakes of conventional structures, each friction discs 50 has larger inner and outer diameters of the friction area, resulting in higher braking torque. Furthermore, without increasing the thickness of the novel brake 1, the size of the friction discs 50 can be enlarged by increasing the outer diameter of the braking stator 10, which further expands the inner and outer diameters of the friction discs 50 and increases the torque of the novel brake 1. The mounting positions of the mounting elements 90 and the assembly elements 70 are more flexible, and the mounting space is more abundant. A variety of mounting methods can be implemented according to the structure of the target device 2, which improves the scope of application scenarios.

In some embodiments, the novel brake 1 may further include a protective structure; the protective structure and the target device 2 enclose a sealed space; the armature 20, the N friction discs 50 and the N movable plates 60 are all located within the sealed space; and the protective structure at least partially covers the braking part of the target device 2. Specifically, the protective structure may be a dust cover, a waterproof cover, a sealing ring, an anti-collision cover, or other such structures. It is specifically arranged to cover the outer side of the novel brake 1, and can at least partially cover the braking part of the target device 2, thereby playing a protective role for the novel brake 1. For example, it can prevent oil contamination, dust, water intrusion and collision damage, which in turn improves the protection class and performance and expands the scope of application scenarios.

In some embodiments, the novel brake 1 may further include a reset structure. Specifically, the reset structure can be reset holes opened on the movable plates 60 and the N friction discs 50. The multiple reset holes are axially through-going, and a reset column adapted to the reset holes are adopted. By sequentially passing the reset column through the multiple reset holes, the reset operation of the friction discs 50 is achieved. The reset operation includes centering the friction discs 50 and aligning the matching parts 51 of the multiple friction discs 50, which facilitates the installation of the novel brake 1. Of course, the reset structure may also specifically be reset marks located on the movable plates 60 and the N friction discs 50. The reset operation of the friction discs 50 is achieved by aligning the multiple reset marks, which can simplify the reset operation and improve reset efficiency. The aforementioned reset structure can determine whether the movable plates 60 and the friction discs 50 are fully reset by judging or controlling the alignment degree of the reset holes or the reset marks.

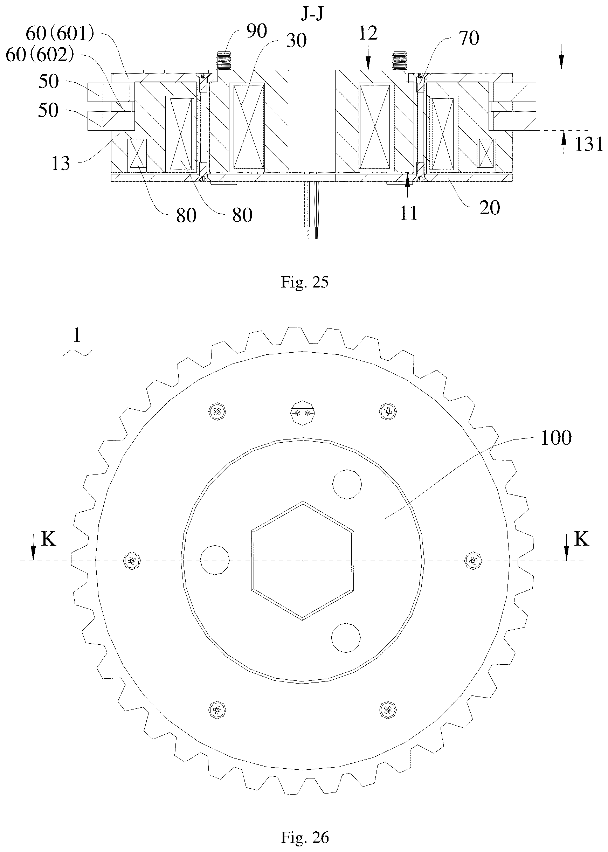

Please refer to Figs. 26 to 49, in some embodiments, the novel brake 1 may further include a manual release assembly 100. The manual release assembly 100 is selectively matched with the first movable plate 60 and the armature 20 to control a distance between the armature 20 and the braking stator 10 as well as a distance between the first movable plate 60 and the limit step 13, thereby driving the first movable plate 60 to move away from or close to the friction discs 50 and further achieving the release and compression of the friction discs 50. In this embodiment, the manual release assembly 100 is applicable to application scenarios requiring manual release, which adds a release mode for the friction discs 50 and improves operational convenience and flexibility.

Specifically, the manual release assembly 100 can be configured as structures such as a rotating handwheel 101, a release screw 102, a release handle 103, or a wedge block. Examples of the structure of the manual release assembly 100 are provided below, but are not limited to the following embodiments.

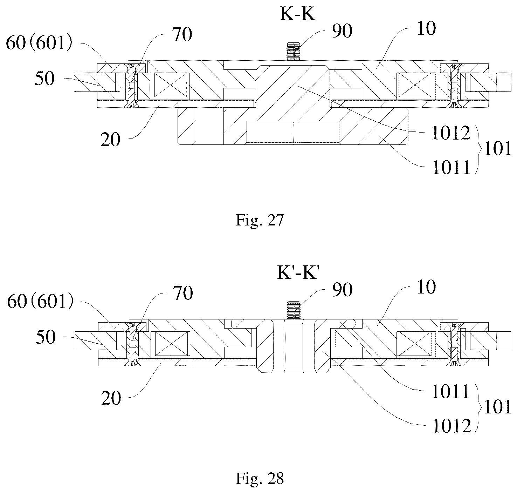

In Embodiment 1, as shown in Figs. 26 and 27, the manual release assembly 100 includes a rotating handwheel 101; the rotating handwheel 101 includes an operating part 1011 and a rotating part 1012 that are connected to each other; the operating part 1011 is arranged adjacent to the armature 20; the outer contour of the rotating part 1012 is provided with external threads, and the central hole of the braking stator 10 is provided with internal threads; and the rotating part 1012 achieves threaded engagement with the internal threads of the braking stator 10 via its external threads. The rotating part 1012 is not in contact with the central hole of the armature 20. When manual release is not performed, the operating part 1011 is also not in contact with the armature 20, so that it does not affect the normal attraction and release of the armature 20. The rotating part 1012 can be screwed into and out of the central hole of the braking stator 10, by applying a rotational force to the operating part 1011, the operating part 1011 can be moved axially, such that the operating part 1011 presses against or moves away from the armature 20, adjusting the distance between the braking stator 10 and the armature 20, thereby achieving the release or compression of the friction discs 50.

The rotating handwheel 101 can be rotated in various ways. For example, the operating part 1011 can be manually controlled. In this case, anti-slip lines and anti-slip grooves may be provided on the operating part 1011, which is not limited herein. As another example, the operating part 1011 can also be controlled by a fixture. Specifically, matching holes may be provided on the operating part 1011, and rotation is achieved by inserting the fixture into the matching holes. The shape of the matching holes can be regular or irregular, such as circular, triangular, polygonal, or keyway. The matching holes can be blind holes or through holes, and one or more matching holes can be provided, which is not limited herein.

When the rotating handwheel 101 is screwed in, the operating part 1011 moves axially toward the armature 20, presses against the armature 20, and pushes the armature 20 to move toward the braking stator 10 against the elastic force of the elastic element 40. The first movable plate 60 connected with the armature 20 moves away from the N friction discs 50, and the N friction discs 50 are released to rotate freely. When the rotating handwheel 101 is screwed out, the operating part 1011 moves away from the armature 20 and returns to a non-contact state with the armature 20. The armature 20 is bounced up by the elastic force of the elastic member 40, driving the first movable plate 60 and the remaining movable plates 60 to press against the N friction discs 50. The N friction discs 50 are compressed and can no longer rotate freely.

It should be understood that the rotating handwheel 101 may have various shapes, and all structures related to the principle of squeezing and releasing the armature 20 through the threaded screwing-in and screwing-out method are consistent with the design concept of the present application.

Of course, in other embodiments, as shown in Fig. 28, the operating part 1011 may be arranged adjacent to the braking stator 10; the rotating part 1012 is not in contact with the central hole of the braking stator 10, and the rotating part 1012 achieves threaded engagement with the armature 20 via external threads and internal threads. Based on the similar working principle, the release and compression of the friction discs 50 can be achieved through the operating part 1011 and the rotating part 1012, and the specific structure can refer to the description of Embodiment 1.

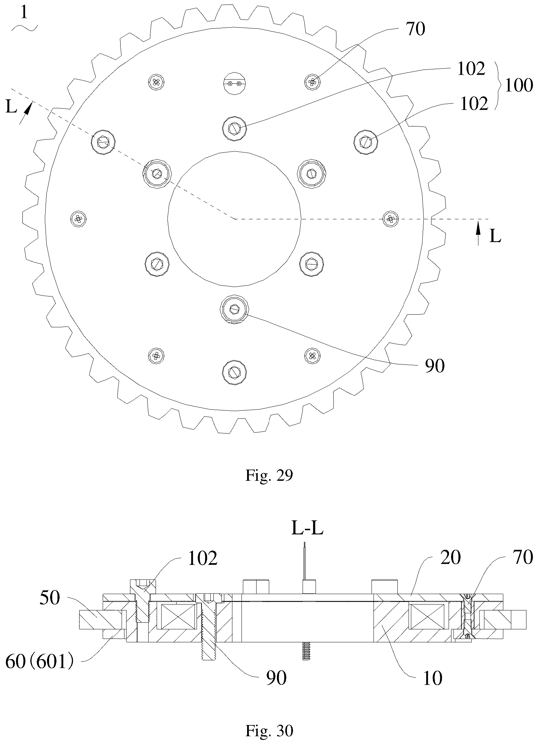

In Embodiment 2, as shown in Figs. 29 and 30, the manual release assembly 100 includes a plurality of release screws 102. The braking stator 10 is provided with a plurality of threaded holes in the axial direction, and the armature 20 is provided with a plurality of smooth holes aligned with the threaded holes in the axial direction. The release screws 102 are inserted through the smooth holes into the threaded holes. The plurality of release screws 102, threaded holes, and smooth holes are evenly distributed. The release screws 102 are threadedly engaged with the braking stator 10 via the threaded holes, and are slidably matched with the armature 20 via the smooth holes. When manual release is not performed, there is no contact between the release screws 102 and the braking stator 10, which does not affect the normal attraction and release of the armature 20. In this embodiment, the heads of the release screws 102 are arranged adjacent to the armature 20; specifically, the outer diameter of the heads of the release screws 102 is larger than that of the smooth holes, enabling the heads of the release screws 102 to abut against the armature 20. By screwing the release screws 102 in and out, the release screws 102 are moved in the axial direction, and the heads of the release screws 102 press against or move away from the armature 20, thereby adjusting the distance between the braking stator 10 and the armature 20. Of course, there may also be only one release screw 102, one threaded hole, and one smooth hole.

When the novel brake 1 only includes the main coil 30, the release screws 102 may be arranged within the range covered by the inner magnetic pole face 114 or within the range covered by the outer magnetic pole face 115; when the novel brake 1 includes both the main coil 30 and the secondary coil 80, the release screws 102 may be arranged within the range covered by the inner magnetic pole face 114, within the range covered by the middle magnetic pole face 116, or within the range covered by the outer magnetic pole face 115.

Of course, the release screws 102 may also be arranged outside the range covered by the magnetic pole faces. For example, a radially extending step may be provided at the edge of the central hole of the braking stator 10, the central hole of the armature 20 may be reduced (refer to the central hole structures of the braking stator 10 and the armature 20 in Fig. 27), and the release screws 102 are arranged on this step.

The release screws 102 may be locked inside the braking stator 10, meaning they do not protrude from the second end face 12 of the braking stator 10 through the threaded holes. The release screws 102 may not be locked inside the braking stator 10 but are slidably matched with the braking stator 10, which means they can protrude from the second end face 12 of the braking stator 10. In this case, the protruding ends of the release screws 102 can be locked to the target device 2 requiring braking.

When the release screws 102 are screwed in, the heads of the release screws 102 press against the armature 20, pushing the armature 20 to move toward the braking stator 10 against the elastic force of the elastic element 40. The first movable plate 60 connected with the armature 20 moves away from the N friction discs 50, and the N friction discs 50 are released to rotate freely. When the release screws 102 are screwed out, the release screws 102 return to a non-contact state with the armature 20. The armature 20 is bounced up by the elastic force of the elastic element 40, driving the first movable plate 60 and the remaining movable plates 60 to press against the N friction discs 50. The N friction discs 50 are compressed and can no longer rotate freely.

In the structure of Embodiment 2 described above, the heads of the release screws 102 are arranged adjacent to the armature 20. Similarly, in other embodiments, the heads of the release screws 102 may also be arranged adjacent to the braking stator 10. In this case, the braking stator 10 is provided with a plurality of smooth holes in the axial direction, and the armature 20 is provided with threaded holes aligned with the smooth holes in the axial direction. The release screws 102 are inserted through the smooth holes into the threaded holes. The plurality of release screws 102, threaded holes, and smooth holes are evenly distributed. The release screws 102 are threadedly engaged with the armature 20 via the threaded holes, and are slidably matched with the braking stator 10 via the smooth holes. It should be understood that when the heads of the release screws 102 are arranged adjacent to the braking stator 10, the outer diameter of the heads of the release screws 102 is larger than that of the smooth holes, enabling the heads of the release screws 102 to abut against the braking stator 10. By screwing the release screws 102 in and out, the armature 20 is moved in the axial direction, thereby adjusting the distance between the braking stator 10 and the armature 20. When manual release is not performed, there is no contact between the heads of the release screws 102 and the braking stator 10, which does not affect the normal attraction and release of the armature 20. The working principle is similar to that when the heads of the release screws 102 are arranged adjacent to the armature 20, and thus will not be repeated herein. The release screws 102 can also be equivalently replaced with bolts, rivets, pins, or other such components, which is not limited herein.

In Embodiments 1 and 2, the rotating handwheel 101 and the release screws 102 can be regarded as rotating elements adapted to the braking stator 10 and the armature 20.

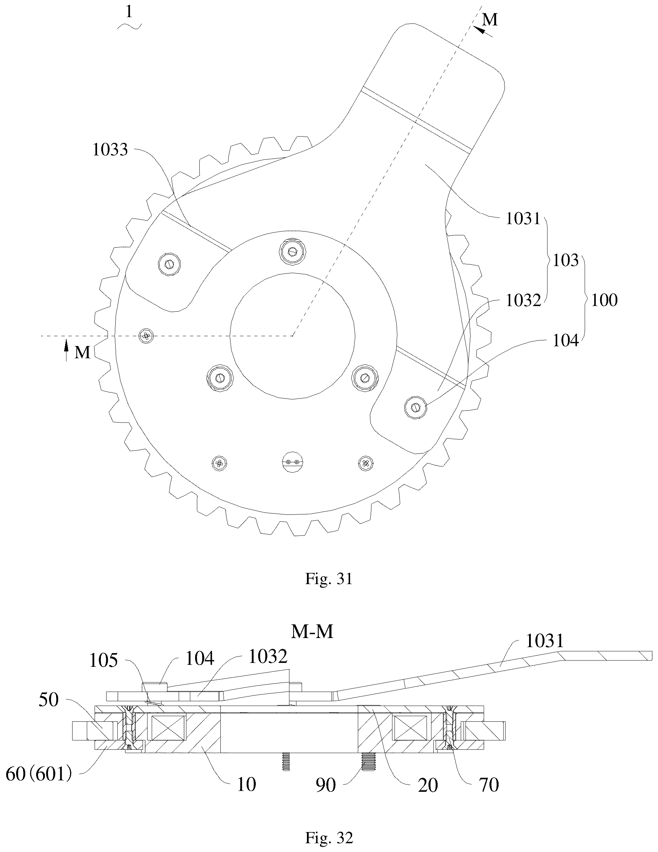

In Embodiment 3, as shown in Figs. 31 and 32, the manual release assembly 100 includes a release handle 103, a plurality of release connectors 104, and a plurality of release elastic elements 105. The release handle 103 includes a force application part 1031 and a release part 1032 that are connected to each other. The shape formed by the force application part 1031 and the release part 1032 is Y-shaped, V-shaped, or a similar shape. The force application part 1031 and the release part 1032 are arranged in a bent manner and form a bending part 1033. The release part 1032 is arranged adjacent to the armature 20. The release connectors 104 are slidably inserted through the release part 1032 and the armature 20 in the axial direction, and are locked inside the braking stator 10. The release elastic elements 105 are disposed between the release part 1032 and the braking stator 10, and the release elastic elements 105 are respectively sleeved onto the release connectors 104. The armature 20 is provided with avoidance holes for the release elastic elements 105 and the release connectors 104. A plurality of release connectors 104 may be provided; for example, two release connectors 104 are arranged symmetrically, and the center line connecting the two release connectors 104 passes through the center of the novel brake 1, ensuring that the force exerted on the armature 20 by the manual release assembly 100 is more uniform.

The release elastic elements 105 are abutted between the release part 1032 and the bottom of the counterbore of the braking stator 10, keeping the release handle 103 separated from the armature 20 when no external force is applied. The bending part 1033 can serve as the fulcrum of the force application part 1031 and the release part 1032. The release handle 103 adopts the lever principle, by applying an external force to the force application part 1031, the release part 1032 presses against the armature 20, pushing the armature 20 to move toward the braking stator 10 against the elastic force of the elastic element 40; the first movable plate 60 connected with the armature 20 moves away from the N friction discs 50, and the N friction discs 50 are released to rotate freely. For example, when an external force is applied to the force application part 1031, the force application part 1031 moves axially closer to the braking stator 10, causing the release part 1032 to tilt upward; then the bending part 1033 abuts against the armature 20 to form the fulcrum of the lever structure; the bending part 1033 pushes the armature 20 to move toward the braking stator 10 against the elastic force of the elastic element 40, the first movable plate 60 connected with the armature 20 moves away from the N friction discs 50, and the N friction discs 50 are released. As another example, when an external force in the opposite direction is applied to the force application part 1031, the force application part 1031 moves axially away from the braking stator 10, and the end of the release part 1032 away from the force application part 1031 abuts against the armature 20; the release connectors 104 forms the fulcrum of the lever structure; the end of the release part 1032 pushes the armature 20 to move toward the braking stator 10 against the elastic force of the elastic element 40, the first movable plate 60 connected with the armature 20 moves away from the N friction discs 50, and the N friction discs 50 are released.

In this embodiment, external forces can be applied to the release handle 103 in multiple directions, making the operation more flexible and convenient. All these force application methods can achieve the effect of releasing the friction discs 50, thereby expanding the application scenarios of the novel brake 1. In addition, in this embodiment, a continuous external force needs to be applied to the force application part 1031 to keep the friction discs 50 in the released state. Therefore, release elastic elements 105 are disposed between the release part 1032 and the braking stator 10. When manual release is not performed, the release elastic elements 105 keep the release handle 103 out of contact with the armature 20, which does not affect the normal attraction and release of the armature 20. When an external force is applied to the release handle 103, the release elastic elements 105 also function as buffers, achieving amplitude attenuation during the release process and reducing collision noise between the release handle 103 and the armature 20 as well as between the armature 20 and the braking stator 10.

In the structure of Embodiment 3 described above, the release connectors 104 are locked inside the braking stator 10. Of course, in other embodiments, the release connectors 104 may also pass through the braking stator 10 and be slidably matched with the braking stator 10, i.e., protrude to the second end face 12 of the braking stator 10. In this case, the protruding ends of the release connectors 104 can be locked to the target device 2 requiring braking. The rest of the structure and working principle are the same as those of Embodiment 3 described above, and thus will not be repeated herein.

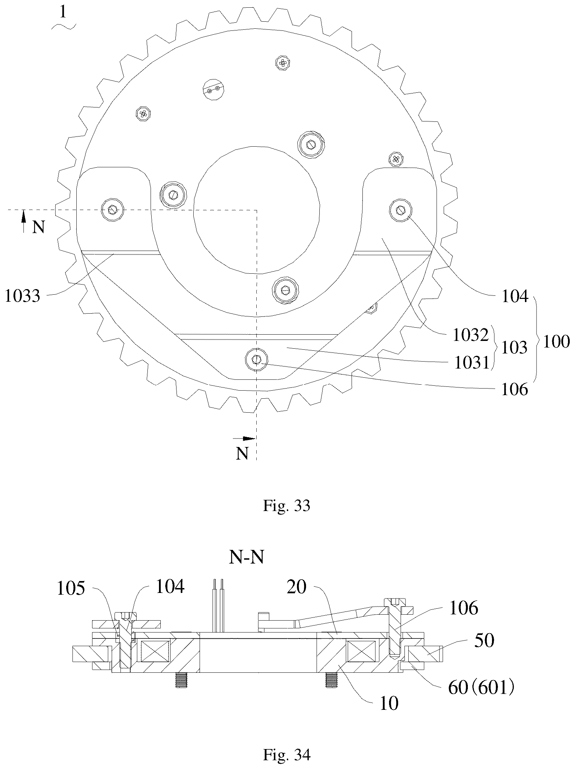

In Embodiment 4, as shown in Figs. 33 and 34, the manual release assembly 100 includes a release handle 103, a plurality of release connectors 104, a plurality of release elastic elements 105, and a driving screw 106. The release handle 103 includes a force application part 1031 and a release part 1032 that are connected to each other. The shape formed by the force application part 1031 and the release part 1032 is V-shaped, Y-shaped, or a similar shape. The force application part 1031 and the release part 1032 are arranged in a bent manner and form a bending part 1033. The release part 1032 is arranged adjacent to the armature 20. The release connectors 104 are slidably inserted through the release part 1032 in the axial direction and are locked inside the braking stator 10. The release elastic elements 105 are disposed between the release part 1032 and the braking stator 10, and the release elastic elements 105 are sleeved onto the release connectors 104. The armature 20 is provided with avoidance holes for the release elastic elements 105 and the release connectors 104. A plurality of release connectors 104 may be provided; for example, two release connectors 104 are arranged symmetrically, and the center line connecting the two release connectors 104 passes through the center of the novel brake 1, ensuring that the pulling force exerted on the armature 20 by the manual release assembly 100 is more uniform.

There are various arrangement modes for the driving screw 106, and examples are provided below.

Example 1, the driving screw 106 is slidably inserted through the force application part 1031 and screwed into the braking stator 10 via threaded engagement. The armature 20 is provided with an avoidance hole for the driving screw 106, and the head of the driving screw 106 can abut against the end face of the force application part 1031 facing away from the armature 20. When it is necessary to release the friction discs 50, the driving screw 106 is screwed into the braking stator 10. The head of the driving screw 106 pushes the force application part 1031 to move axially closer to the braking stator 10. The bending part 1033 can serve as the fulcrum of the force application part 1031 and the release part 1032. Based on the lever principle, the release part 1032 is tilted upward, and then the bending part 1033 abuts against the armature 20, pushing the armature 20 to move toward the braking stator 10 against the elastic force of the elastic element 40. The first movable plate 60 connected with the armature 20 moves away from the N friction discs 50, the N friction discs 50 are released, and the novel brake 1 is kept in the released state.

When it is necessary to cancel the released state, the driving screw 106 is screwed out of the braking stator 10 by a certain number of turns. Under the action of the release elastic elements 105, the bending part 1033 of the release part 1032 is separated from the armature 20. The armature 20 is bounced up by the elastic force of the elastic element 40, driving the first movable plate 60 to press against the N friction discs 50 and the remaining movable plates 60. The N friction discs 50 are compressed, and the novel brake 1 is kept in the braking state.

Example 2, the driving screw 106 is slidably inserted through the force application part 1031 and screwed into the braking stator 10 via threaded engagement. An abutting member is fixedly arranged on the driving screw 106, and the force application part 1031 is fixed between the head of the driving screw 106 and the abutting member. Specifically, the abutting member may be a nut, a circlip, or the like. The armature 20 is provided with an avoidance hole for the driving screw 106, and the abutting member can abut against the end face of the force application part 1031 close to the armature 20. When it is necessary to release the friction discs 50, the driving screw 106 is screwed out of the braking stator 10 by a certain number of turns. The driving screw 106 drives the force application part 1031 to move axially away from the braking stator 10, and the release connectors 104 form the fulcrum of the lever structure. This causes the end of the release part 1032 away from the force application part 1031 to abut against the armature 20, pushing the armature 20 to move toward the braking stator 10 against the elastic force of the elastic element 40. The first movable plate 60 connected with the armature 20 moves away from the N friction discs 50, the N friction discs 50 are released, and the novel brake 1 is kept in the released state.

Both Example 1 and Example 2 can achieve the effect of releasing the friction discs 50 by screwing the driving screw 106 in or out. Moreover, under the locking effect of the driving screw 106, the released state can be maintained, which makes the operation more flexible and convenient and expands the application scenarios of the novel brake 1.

Example 3, the driving screw 106 is screwed into the braking stator 10 via threaded engagement. The armature 20 is provided with an avoidance hole for the driving screw 106. Different from Example 1 and Example 2, the head of the driving screw 106 may be located between the force application part 1031 and the armature 20. The force application part 1031 is provided with a through hole corresponding to the head of the driving screw 106 in the axial direction, and tools such as a wrench or a screwdriver can be used to screw the driving screw 106 in or out through this through hole. When it is necessary to release the friction discs 50, the driving screw 106 is screwed out of the braking stator 10 by a certain number of turns. Since the head of the driving screw 106 abuts against the end face of the force application part 1031 close to the armature 20, the force application part 1031 will be jacked up when the driving screw 106 is screwed out, driving the force application part 1031 to move axially away from the braking stator 10. The release connectors 104 form the fulcrum of the lever structure, which causes the end of the release part 1032 away from the force application part 1031 to abut against the armature 20, pushing the armature 20 to move toward the braking stator 10 against the elastic force of the elastic element 40. The first movable plate 60 connected with the armature 20 moves away from the N friction discs 50, the N friction discs 50 are released, and the novel brake 1 is kept in the released state.

Example 4, different from Example 1, Example 2 and Example 3 described above, the driving screw 106 is threadedly engaged with the force application part 1031. Instead of being inserted through the braking stator 10 or the armature 20, the tail end of the driving screw 106 can abut against the first end face 11 of the braking stator 10, and the driving screw 106 avoids the armature 20. When the driving screw 106 is screwed in, the length of the screw rod portion screwed into the force application part 1031 increases, which increases the distance between the armature 20 and the force application part 1031. The force application part 1031 moves axially away from the braking stator 10, and the release connectors 104 form the fulcrum of the lever structure. The end of the release part 1032 away from the force application part 1031 abuts against the armature 20, pushing the armature 20 to move toward the braking stator 10 against the elastic force of the elastic element 40, thereby achieving the release of the N friction discs 50. When the driving screw 106 is screwed out, the released state of the N friction discs 50 is canceled.

All of Examples 1 to 4 described above can achieve the release effect of the driving screw 106. Of course, on the basis of the above examples, those skilled in the art can also make other structural improvements, which also fall within the protection scope of the present application.

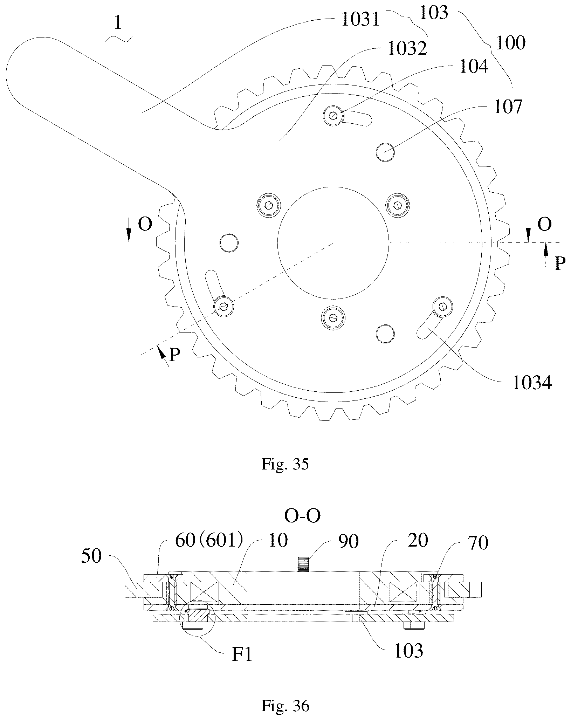

In Embodiment 5, as shown in Figs. 35 to 39, the manual release assembly 100 is disposed at an armature end of the novel brake 1. The manual release assembly 100 includes a release handle 103, a plurality of release connectors 104, and a plurality of acting blocks 107. The release handle 103 includes a force application part 1031 and a release part 1032. The force application part 1031 can be strip-shaped or sheet-shaped, and the release part 1032 can be ring-shaped. The release part 1032 is provided with connecting holes 1034 evenly distributed around the axis; the connecting holes 1034 are kidney-shaped holes or semi-kidney-shaped holes, i.e., the connecting holes 1034 are non-circular and have a certain extension length. The release connectors 104 are slidably inserted through the connecting holes 1034 and locked inside the braking stator 10. The armature 20 is provided with avoidance holes for the release connectors 104, and the release connectors 104 can control the distance between the release part 1032 and the braking stator 10. The force application part 1031 and the release part 1032 are either integrally connected or separately arranged. When they are separately arranged, there is a mutually adapted matching structure between the force application part 1031 and the release part 1032. Normally, the force application part 1031 is separated from the novel brake 1. When it is necessary to release the friction discs 50, the force application part 1031 is matched with the release part 1032, and the force application part 1031 is rotated to release the friction discs 50.

The acting blocks 107 are arranged on the release part 1032, and the armature 20 is provided with limiting grooves 21 where the acting blocks 107 can be accommodated. When the force application part 1031 drives the release part 1032 to rotate around the central axis relative to the novel brake 1, the release connectors 104 remain relatively stationary with the novel brake 1. The connecting holes 1034 serve to limit the maximum rotation angle of the release handle 103. The acting blocks 107 are synchronously rotated into or out of the limiting grooves 21, thereby moving the armature 20 away from or close to the braking stator 10, and realizing the braking and release of the novel brake 1.

When the novel brake 1 is in the braking state, the acting blocks 107 are located inside the limiting grooves 21, and the armature 20 is moved away from the braking stator 10 under the elastic force of the elastic element 40. When it is necessary to release the friction discs 50, an external force is applied to the force application part 1031 to drive the release part 1032 to rotate, which in turn drives the acting blocks 107 to rotate out of the limiting grooves 21, increasing the distance between the release part 1032 and the armature 20. Since the release connectors 104 limit the distance between the release part 1032 and the braking stator 10, the acting blocks 107 can only push the armature 20 to move toward the braking stator 10 against the elastic force of the elastic element 40. The first movable plate 60 connected with the armature 20 moves away from the N friction discs 50, the N friction discs 50 are released, and the novel brake 1 is released from the braking state.

In this embodiment, by adjusting the position of the limiting grooves 21 and the matching position between the release connectors 104 and the connecting holes 1034, release modes including clockwise rotation, counterclockwise rotation, and both clockwise and counterclockwise rotation can be achieved. For example, when the novel brake 1 is in the braking state, if the axial projection of the release connectors 104 is located in the middle of the connecting holes 1034, the acting blocks 107 are located inside the limiting grooves 21. In this case, rotating the release handle 103 either clockwise or counterclockwise can move the acting blocks 107 out of the limiting grooves 21 to release the friction discs 50. When the release handle 103 is rotated until the release connectors 104 are located in the middle of the connecting holes 1034, the braking state is restored, and the friction discs 50 can no longer rotate freely.

The release connectors 104 may be screws, bolts, or the like. The heads of the release connectors 104 abut against the end face of the release part 1032 facing away from the armature 20. The release connectors 104 can also be sleeved with release elastic elements 105, which are abutted between the release part 1032 and the bottom of the counterbore of the braking stator 10. To reduce mechanical wear between the release part 1032 and the armature 20, a gasket 109 can also be disposed between each release elastic element 105 and the release part 1032. The acting blocks 107 may be of block-shaped, spherical, columnar, or other structures, which is not limited herein. The acting blocks 107 act on the armature 20 through their flat surfaces, inclined surfaces, arc surfaces, etc., thereby moving the armature 20 axially toward or away from the braking stator 10. Therefore, all acting blocks 107 with flat surfaces, inclined surfaces, arc surfaces, or other similar shapes shall fall within the protection scope of the present application.

In this embodiment, the axial movement distance of the release handle 103 depends on the thickness of the acting blocks 107. Therefore, the operator does not need to consider the jacking stroke of the manual release assembly 100 during operation. In addition, the release handle 103 is not arranged in a bent manner, which can reduce the axial thickness of the release handle 103, thereby reducing the overall thickness of the novel brake 1. This makes the novel brake 1 easy to operate, more suitable for narrow spaces, and expands its application scenarios.

Of course, in other embodiments, the limiting grooves 21 and the acting blocks 107 may be omitted. A wedge block with an inclined surface or an arc surface is inserted between the release part 1032 and the armature 20. The wedge block presses the armature 20 to move it closer to the braking stator 10, thereby releasing the friction discs 50; the friction discs 50 are compressed by pulling out the wedge block. The maximum axial thickness of the wedge block that can be inserted between the release part 1032 and the armature 20 is equal to the maximum distance between the release part 1032 and the armature 20. The wedge block can be slidably connected to the braking stator 10 or the release handle 103, or it can be an independent tool.

In Embodiment 6, as shown in Figs. 40 and 41, different from Embodiment 5, the manual release assembly 100 is disposed at a stator end of the novel brake 1. The manual release assembly 100 includes a release handle 103, a plurality of release connectors 104, and a plurality of acting blocks 107. The release handle 103 includes a force application part 1031 and a release part 1032; the force application part 1031 can be strip-shaped or sheet-shaped, and the release part 1032 can be ring-shaped. The release part 1032 is provided with connecting holes 1034 evenly distributed around the axis. The connecting holes 1034 are kidney-shaped holes or semi-kidney-shaped holes, i.e., the connecting holes 1034 are non-circular and have a certain extension length. The release connectors 104 are slidably inserted through the connecting holes 1034, and also slidably pass through the braking stator 10 before being locked inside the armature 20. The force application part 1031 and the release part 1032 are either integrally connected or separately arranged. When they are separately arranged, there is a mutually adapted matching structure between the force application part 1031 and the release part 1032. Normally, the force application part 1031 is separated from the novel brake 1. When it is necessary to release the friction discs 50, the force application part 1031 is matched with the release part 1032, and the force application part 1031 is rotated to release the friction discs 50.

The acting blocks 107 are arranged on the release part 1032, and the braking stator 10 is provided with limiting grooves 21 where the acting blocks 107 can be accommodated. The release connectors 104 are also sleeved with release elastic elements 105, which are abutted between the release part 1032 and the heads of the release connectors 104; the release elastic elements 105 are used to provide elastic force for moving the release part 1032 close to the braking stator 10. When the force application part 1031 drives the release part 1032 to rotate around the central axis relative to the novel brake 1, the release connectors 104 remain relatively stationary with the novel brake 1. The connecting holes 1034 serve to limit the maximum rotation angle of the release handle 103. The acting blocks 107 are synchronously rotated into or out of the limiting grooves 21, thereby moving the armature 20 away from or close to the braking stator 10, and realizing the braking and release of the novel brake 1.

When the novel brake 1 is in the braking state, the acting blocks 107 are located inside the limiting grooves 21, the N movable plates 60 compress the N friction discs 50, and the armature 20 is moved away from the braking stator 10 under the elastic force of the elastic element 40. When it is necessary to release the friction discs 50, an external force is applied to the force application part 1031 to drive the release part 1032 to rotate, which in turn drives the acting blocks 107 to rotate out of the limiting grooves 21, increasing the distance between the release part 1032 and the braking stator 10. The release elastic elements 105 between the heads of the release connectors 104 and the release part 1032 are compressed, and the release part 1032 drives the heads of the release connectors 104 to move away from the braking stator 10. Since the release connectors 104 are fixedly connected with the armature 20, the release connectors 104 drive the armature 20 to move closer to the braking stator 10. The armature 20 drives the first movable plate 60 to move away from the N friction discs 50, the N friction discs 50 are released, and the novel brake 1 is released from the braking state.

In this embodiment, by adjusting the position of the limiting grooves 21 and the matching position between the release connectors 104 and the connecting holes 1034, release modes including clockwise rotation, counterclockwise rotation, and both clockwise and counterclockwise rotation can be achieved. For example, when the novel brake 1 is in the braking state, if the axial projection of the release connectors 104 is located in the middle of the connecting holes 1034, the acting blocks 107 are located inside the limiting grooves 21. In this case, rotating the release handle 103 either clockwise or counterclockwise can move the acting blocks 107 out of the limiting grooves 21 to release the friction discs 50. When the release handle 103 is rotated until the release connectors 104 are located in the middle of the connecting holes 1034, the braking state is restored, and the friction discs 50 can no longer rotate freely.

The release connectors 104 may be screws, bolts, or similar components. To reduce mechanical wear between the release part 1032 and the braking stator 10, a gasket 109 can also be disposed between each release elastic element 105 and the release part 1032. The acting blocks 107 may be of block-shaped, spherical, columnar, or other structures, which is not limited herein. The acting blocks 107 act on the braking stator 10 through their flat surfaces, inclined surfaces, arc surfaces, or other surfaces, thereby moving the armature 20 axially toward or away from the braking stator 10. Therefore, all acting blocks 107 with flat surfaces, inclined surfaces, arc surfaces, or other similar shapes shall fall within the protection scope of the present application.

In this embodiment, the axial movement distance of the release handle 103 depends on the thickness of the acting blocks 107. Therefore, the operator does not need to consider the jacking stroke of the manual release assembly 100 during operation. In addition, the release handle 103 is not arranged in a bent form, which can reduce the axial thickness of the release handle 103, thereby reducing the overall thickness of the novel brake 1. This makes the novel brake 1 easy to operate, more suitable for narrow spaces, and expands its application scenarios.

In other embodiments, the manual release assembly 100 is located on the second end face 12 of the braking stator 10. The release connectors 104 pass through the release part 1032 and then are locked to the first movable plate 60, and the release connectors 104 are sleeved with release elastic elements 105. Since the release connectors 104 are fixedly connected with the first movable plate 60, the matching relationship between the release connectors 104 and the first movable plate 60 will theoretically not change when no rotational force is applied to the release connectors 104. The release connectors 104 can act to pull the first movable plate 60, thereby releasing the friction discs 50.

Of course, in other embodiments, the limiting grooves 21 and the acting blocks 107 may be omitted. A wedge block with an inclined surface or an arc surface is inserted between the release part 1032 and the braking stator 10 to move the armature 20 closer to the braking stator 10, thereby releasing the friction discs 50; the friction discs 50 are compressed by pulling out the wedge block. The maximum axial thickness of the wedge block that can be inserted between the release part 1032 and the braking stator 10 is equal to the maximum distance between the release part 1032 and the braking stator 10. The wedge block can be slidably connected to the braking stator 10 or the release handle 103, or it can be an independent tool.

In addition, in other embodiments, the force application part 1031 may also be omitted. A wedge block with an inclined surface or an arc surface is directly inserted between the release part 1032 and the braking stator 10. The release part 1032 drives the armature 20 to move closer to the braking stator 10, and the armature 20 drives the first movable plate 60 to move away from the friction discs 50, thereby releasing the friction discs 50; the friction discs 50 are compressed by pulling out the wedge block. The maximum axial thickness of the wedge block that can be inserted between the release part 1032 and the braking stator 10 is equal to the maximum distance between the release part 1032 and the braking stator 10.

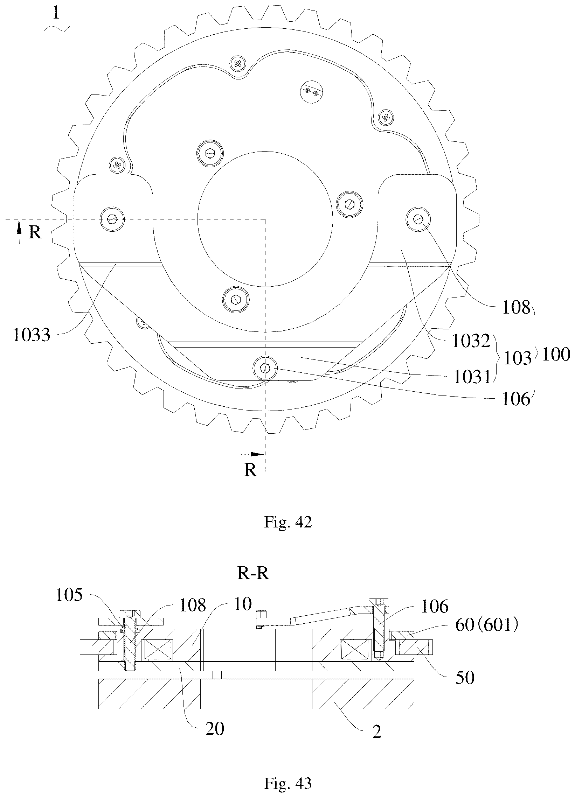

In Embodiment 7, as shown in Figs. 42 and 43, the manual release assembly 100 is disposed at a stator end. The manual release assembly 100 includes a release handle 103, a driving screw 106, and a driven screw 108. The release handle 103 includes a force application part 1031 and a release part 1032 that are connected to each other; the shape formed by the force application part 1031 and the release part 1032 is V-shaped or similar, and the force application part 1031 and the release part 1032 are arranged in a bent manner with a bend 1033 formed at the joint. The driven screw 108 slidably passes through the release part 1032 and the braking stator 10 in sequence, and is threadedly connected with the armature 20. The driven screw 108 is sleeved with a release elastic element 105, which is abutted between the release part 1032 and the bottom of the counterbore of the braking stator 10. A plurality of driven screws 108 may be provided; for example, two driven screws 108 are arranged symmetrically, and the line connecting the centers of the two driven screws 108 passes through the center of the novel brake 1, so that the pulling force exerted on the armature 20 by the manual release assembly 100 is more uniform.

Since the driven screw 108 is threadedly engaged with the armature 20, the matching relationship between the driven screw 108 and the armature 20 will theoretically not change when no rotational force is applied to the driven screw 108. When the driving screw 106 drives the driven screw 108 to move axially, the driven screw 108 can act to pull the armature 20. As the driven screw 108 is sleeved with release elastic element 105, the release handle 103 is not in contact with the armature 20 by virtue of the release elastic element 105 when no manual release is performed, which will not affect the normal attraction and release of the armature 20. When an external force is applied to the release handle 103, the release elastic element 105 also has a buffering effect, which can achieve amplitude attenuation during the release process and reduce the collision noise between the release handle 103 and the braking stator 10.

There are various arrangement modes for the driving screw 106, which are illustrated by examples as follows.

Example 1, the driving screw 106 passes through the force application part 1031, is screwed into the braking stator 10 from the second end face 12 of the braking stator 10, and is threadedly engaged with the braking stator 10. The head of the driving screw 106 abuts against the end face of the force application part 1031 facing away from the braking stator 10. When it is necessary to release the friction discs 50, the driving screw 106 is screwed into the braking stator 10, which drives the force application part 1031 to move closer to the braking stator 10. The bend 1033 can serve as the fulcrum of the force application part 1031 and the release part 1032. Based on the lever principle, the release part 1032 is pulled up, which drives the driven screw 108 to move away from the braking stator 10. At the same time, the driven screw 108 pulls the armature 20, making the armature 20 move closer to the braking stator 10 against the elastic force of the elastic element 40. The armature 20 drives the first movable plate 60 connected to it to move away from the N friction discs 50, the N friction discs 50 are released, and the novel brake 1 maintains the released state.

When it is necessary to exit the released state, the driving screw 106 is unscrewed from the braking stator 10, the lever principle ceases to function. The elastic force of the elastic element 40 is used to bounce the armature 20 back, and the N movable plates 60 compress the N friction discs 50, thereby achieving the braking effect.

Example 2, on the basis of Example 1, an abutment member is provided on the driving screw 106, which fixes the force application part 1031 between the head of the driving screw 106 and the abutment member. The abutment member may specifically be a nut, a circlip, or similar components. In this embodiment, since the driving screw 106 moves synchronously with the force application part 1031, when the driving screw 106 is unscrewed, the force application part 1031 drives the release part 1032 to move axially away from the braking stator 10. The release part 1032 pulls the armature 20 to move closer to the braking stator 10 against the elastic force of the elastic element 40. The first movable plate 60 connected with the armature 20 moves away from the N friction discs 50, and the N friction discs 50 are released, thus achieving the effect of releasing the friction discs 50. That is to say, when the driving screw 106 is screwed in, the effect of releasing the friction discs 50 can be achieved by virtue of the lever principle; when the driving screw 106 is unscrewed, the effect of releasing the friction discs 50 can be achieved by virtue of the synchronism between the driving screw 106 and the force application part 1031. With such arrangement, operation mode of manual release is more flexible and convenient, which expands the application scenarios of the novel brake 1.

Example 3, different from Example 1 and Example 2, the head of the driving screw 106 may be located between the force application part 1031 and the braking stator 10. The force application part 1031 is provided with a through hole corresponding to the head of the driving screw 106 in the axial direction, through which tools such as a wrench or a screwdriver can be used to screw the driving screw 106 in or out. When it is necessary to release the friction discs 50, the driving screw 106 is unscrewed a certain number of turns from the braking stator 10. Since the head of the driving screw 106 abuts against the end face of the force application part 1031 close to the braking stator 10, the force application part 1031 will be jacked up when the driving screw 106 is unscrewed, which drives the force application part 1031 and the release part 1032 to move away from the braking stator 10. This pulls the armature 20 to move closer to the braking stator 10 against the elastic force of the elastic element 40. The first movable plate 60 connected with the armature 20 moves away from the N friction discs 50, so that the N movable plates 60 no longer press the N friction discs 50.

Example 4, different from Example 1, Example 2 and Example 3, the driving screw 106 is threadedly engaged with the force application part 1031. Instead of being threadedly engaged with the braking stator 10, the tail of the driving screw 106 can abut against the second end face 12 of the braking stator 10. When the driving screw 106 is screwed in, the length of the screw rod section screwed into the force application part 1031 increases, which increases the distance between the braking stator 10 and the force application part 1031. The force application part 1031 moves axially away from the braking stator 10, which in turn drives the release part 1032 to move away from the braking stator 10. This pulls the armature 20 to move closer to the braking stator 10 against the elastic force of the elastic element 40, so that the N movable plates 60 no longer press the N friction discs 50. When the driving screw 106 is unscrewed, the released state of the friction discs 50 is exited.

All of the aforementioned Example 1 to Example 4 can achieve the release effect of the driving screw 106. Of course, on the basis of the above examples, those skilled in the art may also make other structural improvements, which shall equally fall within the protection scope of the present application.

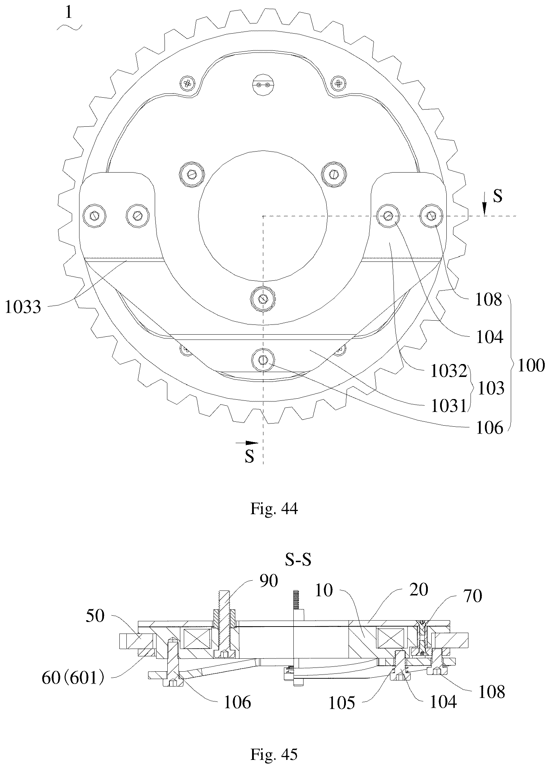

In Embodiment 8, as shown in Figs. 44 and 45, the manual release assembly 100 is disposed at a stator end. Different from Embodiment 7, the manual release assembly 100 includes a release handle 103, a driving screw 106, a driven screw 108 and a release connector 104. The arrangement of the release handle 103 and the driving screw 106 is the same as that of Embodiment 7, and will not be repeated here. The driven screw 108 slidably passes through the release part 1032 and is fixedly connected with the first movable plate 60. Since the driven screw 108 is fixedly connected with the first movable plate 60, the matching relationship between the driven screw 108 and the first movable plate 60 will theoretically remain unchanged when no rotational force is applied to the driven screw 108. The driven screw 108 can act to pull the first movable plate 60, thereby releasing the friction discs 50 and driving the first movable plate 60 to pull the armature 20. When no manual release is performed, there is no contact between the release part 1032 and the driven screw 108, which will not affect the normal attraction and release of the armature 20. The release connector 104 slidably passes through the release part 1032 and is locked in the braking stator 10, and the release connector 104 is sleeved with a release elastic element 105, the function of which can refer to the above embodiments. A plurality of driven screws 108 may be provided; for example, two driven screws 108 are arranged symmetrically, and the line connecting the centers of the two driven screws 108 passes through the center of the novel brake 1.

When it is necessary to release the friction discs 50, the driving screw 106 is screwed into the braking stator 10, which drives the force application part 1031 to move closer to the braking stator 10. The bend 1033 can serve as the fulcrum of the force application part 1031 and the release part 1032. Based on the lever principle, the release part 1032 is pulled up, which drives the driven screw 108 to move away from the braking stator 10; at the same time, the driven screw 108 pulls up the first movable plate 60, and the friction discs 50 are released. When it is necessary to exit the released state, the driving screw 106 is unscrewed from the braking stator 10, and the lever principle ceases to function. The elastic force of the elastic element 40 is then utilized to bounce the armature 20 back, and the armature 20 drives the first movable plate 60 to compress the friction discs 50, thereby achieving the braking effect.

Of course, the arrangement modes of the driving screw 106 can also adopt the modes of Example 2, Example 3 and Example 4 in Embodiment 7, with the main difference lying in the way the driven screw 108 drives the movable plate 60. Those skilled in the art can derive the specific implementation modes of this embodiment on the basis of Embodiment 7, which will not be repeated here.

In Embodiment 9, as shown in Figs. 46 and 47, the manual release assembly 100 is disposed at a stator end. The manual release assembly 100 includes a release handle 103, a driving screw 106 and a driven screw 108. The release handle 103 includes a force application part 1031 and a release part 1032 that are connected to each other; the force application part 1031 and the release part 1032 are arranged in a bent manner, forming a lever structure, with the bend 1033 of the force application part 1031 and the release part 1032 serving as the fulcrum of the lever structure. The driving screw 106 slidably passes through the force application part 1031 and is threadedly connected with the first movable plate 60, and the driven screw 108 slidably passes through the release part 1032 and is threadedly connected with the first movable plate 60.

For example, the shape formed by the force application part 1031 and the release part 1032 is V-shaped or similar. One driving screw 106 is provided, and two driven screws 108 are provided. The driving screw 106 and the two driven screws 108 are uniformly distributed on the novel brake 1, and the line connecting their centers forms an equilateral triangle. The release part 1032 is arranged axisymmetrically with respect to the force application part 1031. In the direction of the axis of symmetry, the distance from the driving screw 106 to the bend 1033 is a first distance, and the distance from the driven screw 108 to the bend 1033 is a second distance. The first distance is twice the second distance, which enables the pulling forces exerted by the driving screw 106 and the driven screws 108 on the first movable plate 60 to be equal, making the force on the first movable plate 60 more uniform. This further makes the gap between the armature 20 and the braking stator 10 more uniform, thereby ensuring the reliability of braking and releasing the friction discs 50, reducing the adverse impact on the structural strength of the release handle 103, and improving the service life of the release handle 103.

Since the driven screws 108 are threadedly engaged with the first movable plate 60, the matching relationship between the driven screws 108 and the first movable plate 60 will theoretically not change when no rotational force is applied to the driven screws 108, and the driven screws 108 can function to pull the first movable plate 60. When it is necessary to release the friction discs 50, the driving screw 106 is screwed into the first movable plate 60, reducing the distance between the force application part 1031 and the first movable plate 60. The driving screw 106 pulls the first movable plate 60 away from the friction discs 50. At the same time, the bend 1033 abuts against the braking stator 10, forming the fulcrum of the lever structure. The force application part 1031 is pressed down, and the release part 1032 is lifted up. The driving screw 106 and the driven screws 108 together drive the first movable plate 60 away from the friction discs 50. When it is necessary to exit the released state, it is only necessary to unscrew the driving screw 106.

In this embodiment, a release elastic element 105 sleeved on the driven screw 108 may be disposed between the head of the driven screw 108 and the release part 1032. The release elastic element 105 may specifically be a rubber ring, a spring, an elastic sheet, or the like. When no manual release is performed, the release elastic element 105 keeps the release handle 103 out of contact with both the driving screw 106 and the driven screw 108, which will not affect the normal attraction and release of the armature 20. The buffering effect of the release elastic element 105 can achieve amplitude attenuation during the release process, and reduce the collision noise between the release handle 103 and the movable plate 60 as well as between the release handle 103 and the braking stator 10.

In Embodiment 10, as shown in Figs. 48 and 49, the manual release assembly 100 is disposed at a stator end. The manual release assembly 100 includes a release handle 103, a driving screw 106 and a driven screw 108. The release handle 103 includes a force application part 1031 and a release part 1032 that are connected to each other; the force application part 1031 and the release part 1032 are arranged in a bent manner, forming a lever structure, with the bend 1033 of the force application part 1031 and the release part 1032 serving as the fulcrum of the lever structure. The driving screw 106 slidably passes through the force application part 1031 and the braking stator 10 and is threadedly connected with the armature 20, and the driven screw 108 slidably passes through the release part 1032 and the braking stator 10 and is threadedly connected with the armature 20.

For example, the shape formed by the force application part 1031 and the release part 1032 is V-shaped or similar. One driving screw 106 is provided, and two driven screws 108 are provided. The driving screw 106 and the two driven screws 108 are uniformly distributed on the novel brake 1, and the line connecting their centers forms an equilateral triangle. The release part 1032 is arranged axisymmetrically with respect to the force application part 1031. In the direction of the axis of symmetry, the distance from the driving screw 106 to the bend 1033 is a first distance, and the distance from the driven screw 108 to the bend 1033 is a second distance. The first distance is twice the second distance, which enables the pulling forces exerted by the driving screw 106 and the driven screws 108 on the armature 20 to be equal. This further makes the gap between the armature 20 and the braking stator 10 more uniform, thereby ensuring the reliability of braking and releasing the friction discs 50, reducing the adverse impact on the structural strength of the release handle 103, and improving the service life of the release handle 103.

Since the driven screws 108 are threadedly engaged with the armature 20, the matching relationship between the driven screws 108 and the armature 20 will theoretically not change when no rotational force is applied to the driven screws 108, and the driven screws 108 can function to pull the armature 20. When it is necessary to release the friction discs 50, the driving screw 106 is screwed in, reducing the distance between the force application part 1031 and the armature 20. The driving screw 106 pulls the armature 20 closer to the braking stator 10. At the same time, the bend 1033 abuts against the braking stator 10, forming the fulcrum of the lever structure. The force application part 1031 is pressed down, and the release part 1032 is lifted up. The driving screw 106 and the driven screws 108 together drive the armature 20 closer to the braking stator 10. When it is necessary to exit the released state, it is only necessary to unscrew the driving screw 106.

In this embodiment, a release elastic element 105 sleeved on the driven screw 108 may be disposed between the head of the driven screw 108 and the release part 1032. The release elastic element 105 may specifically be a rubber ring, a spring, an elastic sheet, or the like. By virtue of the supporting effect of the release elastic element 105, there is no contact between the head of the driven screw 108 and the release part 1032 when no external force is applied to the driving screw 106. When an external force is applied to the driving screw 106, the release elastic element 105 also has a buffering effect, which can achieve amplitude attenuation during the release process and reduce the collision noise between the release handle 103 and the driven screw 108.

The above embodiments list various specific implementation modes of the manual release assembly 100. Of course, in other embodiments, the manual release assembly 100 may also adopt other specific structures, which are not limited herein.

In the conventional technology, a hub motor usually integrates a power system, a transmission system, a braking system and other components, and can be applied to walking equipment such as vehicles, wheelchairs and intelligent robots, featuring advantages like simplifying the overall structure, achieving complex driving, and reducing weight. The braking system adopted by the hub motor is usually a brake with an inner rotor structure. A brake with an inner rotor structure refers to a brake including components such as a stator, an armature, a friction disc, a coil and an elastic element. The friction disc is provided with a central hole in the axial direction, and the central hole is matched with the braking shaft. Taking a power-off brake as an example, when the coil is energized, magnetic force is generated, the armature is attracted to the stator, and the friction disc is in a released state, which can rotate synchronously with the braking shaft. When the coil is de-energized, the magnetic force disappears, the armature resets under the action of the elastic element, and the friction disc is in a pressed state, so that the friction disc no longer rotates synchronously with the braking shaft, achieving the braking effect on the braking shaft. In such brakes, if the central hole of the friction disc is matched with the braking shaft through a shaft sleeve, the brake is referred to as one with an inner rotor structure. However, such brakes need to be equipped with complex transmission mechanisms, thus requiring a large installation space and resulting in a relatively large overall volume of the hub motor.

To address this issue, on the basis of the embodiments of the aforementioned novel brake 1, the novel brake 1 of the present application is applied to a target device 2, i.e., a hub motor. All the content of the embodiments of the novel brake 1 described above is applicable to the hub motor, and reference may be made to the embodiments of the novel brake 1 for structural features that are not described in detail herein. Please also refer to Figs. 50 to 53. The hub motor provided in the embodiment of the present application is described as follows.

Please also refer to Figs. 50 to 53, an embodiment of the present application provides a hub motor, including: a housing 210, being a hollow structure with an opening at one end; a main shaft 220, rotatably connected with the housing 210 and extending out of the housing 210; a motor stator 230, wound around the main shaft 220 and fixedly connected with the main shaft 220; an armature winding 240, wound around the motor stator 230 and fixedly connected with the motor stator 230; a magnetic steel winding 250, wound around an inner wall of the housing 210, fixedly connected with the inner wall of the housing 210, and arranged at a radial interval from the armature winding 240; an end cover 260, covering the opening, wound around the main shaft 220, and rotatably connected with the main shaft 220; a braking part 270, wound around the main shaft 220 and extending in an axial direction, selectively arranged on the inner wall or an outer wall of the housing 210 or an inner wall or an outer wall of the end cover 260, and forming a braking cavity 273 together with the housing 210 or the end cover 260; and a novel brake 1 (i.e., the novel brake 1 in the aforementioned embodiments), located on a same side as the braking part 270, including a braking stator 10 (i.e., the braking stator 10 in the aforementioned embodiments), a main coil 30 (i.e., the main coil 30 in the aforementioned embodiments) arranged on the braking stator 10, an elastic element 40 (i.e., the elastic element 40 in the aforementioned embodiments) arranged on the braking stator 10, an armature 20 arranged adjacent to the braking stator 10 (i.e., the armature 20 in the aforementioned embodiments) and friction discs 50 (i.e., the friction discs 50 in the aforementioned embodiments); where the friction discs 50 are at least partially located in the braking cavity 273, an outer circumference of each friction disc 50 is provided with a matching part 51, the matching part 51 is adapted to the braking part 270 to brake the housing 210, the magnetic steel winding 250 and the end cover 260, and a radial dimension of the matching part 51 is larger than an outer diameter of the armature 20; where the friction discs 50 are sleeved on an outer circumference of the braking stator 10.

It should be noted that the novel brake 1 mainly relies on the cooperation of structures such as the braking stator 10, the main coil 30, the armature 20, the friction disc 50, and the elastic element 40 to achieve the braking effect. Where, when the main coil 30 is energized, a magnetic field will be generated around the outer circumference of the main coil 30, and an attractive magnetic force will be generated in the gap between the braking stator 10 and the armature 20.

Specifically, the hub motor includes a stator unit and a rotor unit. The stator unit includes the main shaft 220, the motor stator 230, and the armature winding 240, while the rotor unit includes the housing 210, the magnetic steel winding 250, and the end cover 260. Among them, the magnetic steel winding 250 includes a plurality of magnetic steel sheets, which are arranged at intervals on the inner side wall of the housing 210. The inner side wall of the housing 210 is parallel to the axis of the main shaft 220. The magnetic steel winding 250 corresponds to the armature winding 240 in position, and there is a radial distance between the magnetic steel winding 250 and the armature winding 240. When the armature winding 240 is energized, it generates a rotating magnetic field according to the AC voltage. This magnetic field interacts with the magnetic field generated by the magnetic steel winding 250 and produces a tangential electromagnetic traction force, which drives the rotor unit to rotate. Meanwhile, in the non-braking state, the rotor unit drives the friction disc 50 of the novel brake 1 to rotate synchronously through the braking part 270. In the braking state, the magnetic force of the novel brake 1 disappears, the friction disc 50 is directly or indirectly pressed by the armature 20, and the friction disc 50 and the rotor unit cannot rotate, thus achieving the braking effect on the rotor unit.

It should be noted that in the embodiment of the present application, the braking part 270 may be disposed inside the cavity structure formed by the housing 210 and the end cover 260. Specifically, it may be arranged on the inner wall of the housing 210 facing the end cover 260, or on the inner wall of the end cover 260. In this case, the novel brake 1 is also disposed inside the cavity structure formed by the housing 210 and the end cover 260. Alternatively, the braking part 270 may be disposed outside the cavity structure formed by the housing 210 and the end cover 260. Specifically, it may be arranged on the outer wall of the housing 210 facing away from the end cover 260, or on the outer wall of the end cover 260. In this case, the novel brake 1 is also disposed outside the cavity structure formed by the housing 210 and the end cover 260. The main shaft 220 is rotatably connected with the housing 210 and the end cover 260 through a first bearing 281 and a second bearing 282, respectively.

When the braking part 270 is disposed on the housing 210, the braking part 270 and the housing 210 may form an integrated structure by means of integral molding. Alternatively, after the braking part 270 and the housing 210 are separately molded, they may be fixed together by welding, riveting, threaded connection, clamping, or other methods. Similarly, when the braking part 270 is disposed on the end cover 260, the braking part 270 and the end cover 260 may form an integrated structure by integral molding. Alternatively, after the braking part 270 and the end cover 260 are separately molded, they may be fixed together by welding, riveting, threaded connection, clamping, or other methods. The housing 210 and the end cover 260 are fixed together by welding, riveting, threaded connection, clamping, or other methods.

In the embodiments of the present application, the novel brake 1 may include different combined components according to the different overall dimensions of the hub motor, which is not limited herein, as long as the outer peripheral contour of the friction disc 50 of the novel brake 1 is provided with the matching part 51. The braking of the rotor unit can be achieved through the matching relationship between the matching part 51 and the braking part 270. Herein, the outer peripheral contour of the friction disc 50 may be understood as the outer peripheral surface, which is parallel to the axial direction.

The hub motor provided in the embodiment of the present application has at least the following technical effects: compared with the conventional technology, in the hub motor provided in the embodiment of the present application, a reasonable spatial layout is adopted for the housing 210, the main shaft 220, the motor stator 230, the armature winding 240, the magnetic steel winding 250, the end cover 260, the braking part 270 and the novel brake 1; by arranging the braking part 270 on the housing 210 or the end cover 260 and disposing the matching part 51 on the outer circumference of the each friction disc 50, the braking of the housing 210, the magnetic steel winding 250 and the end cover 260 can be realized through the matching relationship between the matching part 51 and the braking part 270, which eliminates the need for the friction discs 50 to be fitted with the shaft sleeve, the housing 210, the end cover 260 and other components through the central hole, allowing for more flexible design of the central hole dimensions of the braking stator 10 and the armature 20 of the novel brake 1, so that the diameters of the central holes of the braking stator 10 and the armature 20 can be smaller, there is no need to configure a shaft sleeve, and the shapes of the central holes can be more diversified; when the diameter of the central hole of the braking stator 10 is smaller, the main coil 30 of the novel brake 1 can expand radially toward the central hole, and both the inner and outer diameters of the main coil 30 can be reduced; when both the inner and outer diameters of the main coil 30 are reduced, with the coil thickness, the coil resistance and the coil current remaining unchanged, the main coil 30 can be obtained with more turns; a higher number of ampere-turns leads to a stronger magnetic field, making the coil power easier to control and increasing the coil energy, which in turn enhances the magnetic force and increases the braking torque; this makes the volume of the novel brake 1 easier to control and miniaturize, thereby reducing the overall volume of the hub motor.

In the embodiments of the present application, there may be various matching modes between the braking part 270 and the matching part 51, which are illustrated by examples below but are not limited to the following embodiments.

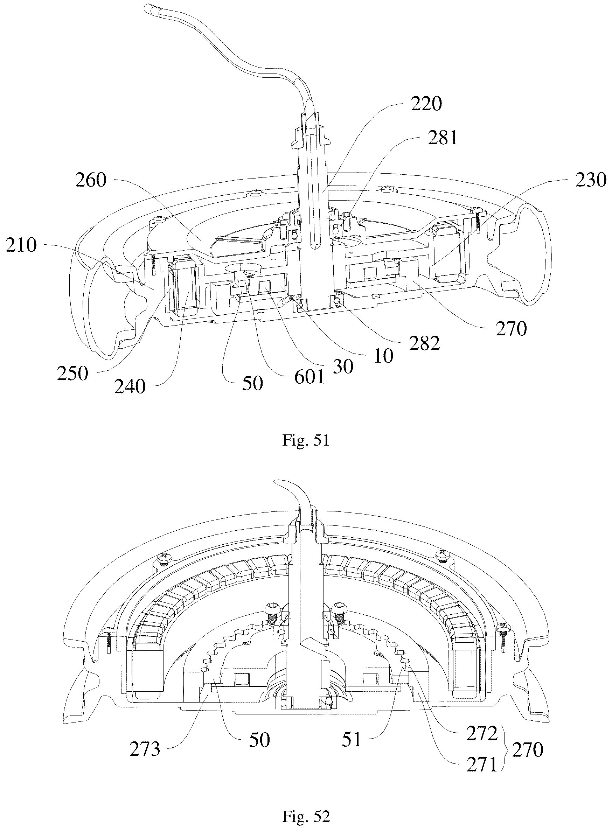

Please refer to Fig. 52, in some embodiments, the braking part 270 includes a sub-fixed part 271 and a sub-braking part 272 that are connected to each other; the sub-fixed part 271 extends in the axial direction, is an annular structure and is arranged around the main shaft 220 and fixed to the housing 210 or the end cover260; the braking cavity 273 is enclosed by the sub-fixed part 271, the sub-braking part 272 and the housing 210 or the end cover 260; and the sub-braking part 272 protrudes from the sub-fixed part 271 and extends in a radial direction, and is arranged around the main shaft 220 and adapted to the matching part 51.

In this embodiment, the sub-fixed part 271 may be an annular body enclosing the braking cavity 273. The annular body is arranged in a surrounding manner and fixed to the housing 210 or the end cover 260 by means of integral molding, welding, riveting, threaded connection, clamping, or other methods, which can provide a more sufficient accommodating space in the axial direction for the novel brake 1.

The sub-fixed part 271 may also be a plurality of columnar bodies enclosing the braking cavity 273. Specifically, the columnar bodies can be regular or irregular shapes such as prisms and cylinders. The plurality of the columnar bodies are arranged at intervals and in a circular ring, and fixed to the housing 210 or the end cover 260 by means of integral molding, welding, riveting, threaded connection, clamping or other methods. This can provide a more sufficient accommodating space in the axial direction for the novel brake 1, and at the same time, it can reduce the weight of the braking part 270, thereby reducing the weight of the entire hub motor.

The sub-fixed part 271 may also be a mesh body enclosing the braking cavity 273. The mesh body can specifically be regular or irregular shapes including triangles, rectangles, rhombuses, circles and the like. Arranged in a surrounding manner, the mesh body is fixed to the housing 210 or the end cover 260 by means of integral molding, welding, riveting, threaded connection, clamping and other methods. This can provide a more sufficient accommodating space in the axial direction for the novel brake 1, and at the same time, it can reduce the weight of the braking part 270, thereby reducing the weight of the entire hub motor.

Of course, the sub-fixed part 271 may also be formed into other shapes, which are not limited herein.

In this embodiment, the sub-braking part 272 may be a plurality of first concave-convex bodies arranged around the inner ring of the sub-fixed part 271, and correspondingly, the matching part 51 is a matching plurality of second concave-convex bodies. Through the matching relationship between the first concave-convex bodies and the second concave-convex bodies, the braking part 270 and the matching part 51 can rotate synchronously around the axis, and the matching part 51 can also prevent the braking part 270 from rotating around the axis. Meanwhile, according to the distribution of the quantity and positions of the friction discs 50, the matching part 51 can generate the same or different axial displacements relative to the braking part 270.

No specific limitation is imposed on the cross-sectional shapes of the first concave-convex bodies and the second concave-convex bodies, which may be regular or irregular shapes such as tooth shape, sawtooth shape, rectangular shape, arc shape, polygonal shape, key shape and the like. Each first concave-convex body includes a radially extending first concave part and a radially extending first convex part that are connected to each other, and each second concave-convex body includes a radially extending second convex part and a radially extending second concave part that are connected to each other. For each friction disc 50, the shapes of the plurality of second concave-convex bodies are generally identical, and may also be all different or partially different; correspondingly, the shapes of the plurality of first concave-convex bodies are adaptively changed as well. When a plurality of friction discs 50 are provided, the shapes of the second concave-convex bodies on different friction discs 50 are generally identical, and may also be all different or partially different, which is not limited herein.

By configuring the first concave-convex body as a radially extending first concave part and a radially extending first convex part, and configuring the second concave-convex body as a radially extending second convex part and a radially extending second concave part, the friction disc 50 can be ensured to have a degree of freedom in the axial direction, thereby achieving the compression and release of the friction disc 50 in a more reliable manner.

In some other embodiments, the braking part 270 may be a plurality of cylinders arranged around the main shaft 220. The plurality of cylinders extend in the axial direction, are adapted to the matching part 51, and are configured to drive the friction discs 50 to rotate together. The plurality of cylinders enclose the braking cavity 273, and the cylinders may specifically be regular or irregular shapes such as prisms and cylinders. The plurality of cylinders are arranged at intervals and in a circular array, and are fixed to the housing 210 or the end cover 260 by means of integral molding, welding, riveting, threaded connection, clamping and other methods. In this case, the matching part 51 is also adaptively configured as a plurality of columnar openings matching the cylinders; the columnar openings may be columnar holes or columnar grooves. Through the matching relationship between the cylinders and the columnar openings, the braking part 270 and the matching part 51 can rotate synchronously around the axis, and the matching part 51 can also prevent the braking part 270 from rotating around the axis. Meanwhile, according to the distribution of the quantity and positions of the friction discs 50, the matching part 51 can generate the same or different axial displacements relative to the braking part 270.

Of course, in other embodiments, the braking part 270 may also adopt other structural forms, which are not limited herein.

To reduce the overall size of the hub motor and achieve the thinning and miniaturization of the hub motor, please refer to Figs. 50 to 53, in some embodiments, the motor stator 230 forms an accommodating cavity 234 around the main shaft 220; the braking part 270 is arranged on the inner wall of the housing 210 or the inner wall of the end cover 260; and the braking part 270 is at least partially located in the accommodating cavity 234, and the novel brake 1 is at least partially located in the accommodating cavity 234 as well.

In this embodiment, the motor stator 230 is configured to have an accommodating cavity 234 arranged around the main shaft 220, and the novel brake 1 is disposed around the main shaft 220 and is partially or entirely located in the accommodating cavity 234. To achieve the matching relationship between the matching part 51 and the braking part 270, the braking part 270 is also partially located in the accommodating cavity 234. In other words, all mechanical structures for power transmission are integrated into the interior of the hub motor, which simplifies the mechanical structure of power transmission, reduces the axial dimension and radial dimension of the hub motor, and minimizes the overall volume of the hub motor. This makes more efficient use of the space of the cavity structure formed by the housing 210 and the end cover 260, resulting in a more compact overall structure and spatial distribution. It improves the power density and energy transmission efficiency of the hub motor, enhances the output torque, dynamic response speed and control accuracy. Furthermore, the working environment of the novel brake 1 is not affected by contaminants such as oil stains and dust, leading to higher reliability, lower failure rate, and more convenient maintenance and inspection.

In some of these embodiments, a gap is provided between the inner wall of the motor stator 230 forming the accommodating cavity 234 and the surface profile of the braking part 270. Specifically, the surface profile of the braking part 270 includes an axially arranged outer wall surface and a radial end face adjacent to the novel brake 1. A radial gap is formed between the axially arranged outer wall surface and the axial inner wall of the accommodating cavity 234, and an axial gap is formed between the radial end face and the radial inner wall of the accommodating cavity 234.

In other words, there is no contact between the surface profile of the braking part 270 and the inner wall of the motor stator 230 that forms the accommodating cavity 234. During the rotation of the braking part 270, there is no interference between the braking part 270 and the motor stator 230, and the motor stator 230 has no adverse effect on the rotation process of the braking part 270. This can avoid mechanical damage between the braking part 270 and the motor stator 230, and also provide a larger safety margin as much as possible for jitters and collisions that may occur during the rotation process.

It is understandable that, in order to reduce the radial dimension of the motor stator 230 or to increase the radial dimension of the braking part 270, a first track may be arranged on the axial inner wall of the motor stator 230 and a second track on the axial outer wall of the braking part 270. The non-contact matching relationship between the first track and the second track enables the interference-free rotational movement of the braking part 270 relative to the motor stator 230.

When the braking part 270 and the novel brake 1 are located inside the cavity structure formed by the housing 210 and the end cover 260, please refer to Figs. 50 to 53, in some embodiments, the motor stator 230 includes: a mounting part 231, fixed to the main shaft 220, and the braking stator 10 being sleeved on the mounting part 231; an extending part 232, connected with the mounting part 231, arranged on an outer circumference of the mounting part 231, and provided with a heat dissipation hole 2321; and a supporting part 233, connected with the extending part 232 and arranged on an outer circumference of the extending part 232; where an axial dimension of the mounting part 240 is larger than an axial dimension of the extending part 232, an axial dimension of the supporting part 233 is larger than an axial dimension of the extending part 232, and the accommodating cavity 234 is formed by the mounting part 231, the extending part 232 and the supporting part 234.

Specifically, a tight fit relationship is formed between the mounting part 231 and the main shaft 220, which may be an interference fit relationship, for example, or a tight fit relationship achieved by fasteners such as screws, rivets, pins, key slots and splines. Any means is acceptable as long as it can ensure that there is no relative rotation between the mounting part 231 and the main shaft 220.

Depending on the type of the novel brake 1, structures such as the braking stator 10 and the armature 20 of the novel brake 1 are directly sleeved on the mounting part 231, and structures such as the friction disc 50 may be sleeved on the mounting part 231 either directly or indirectly. Among them, there is no relative rotation between the braking stator 10 and the mounting part 231, and the central hole of the armature 20 is not in contact with the braking stator 10, so that the normal attraction and release of the armature 20 will not be affected.

In this embodiment, the arrangement of the mounting part 231 can increase the contact area between the motor stator 230 and the main shaft 220, ensure the reliability of the fixing effect between the motor stator 230 and the main shaft 220, enhance the structural strength of the motor stator 230, and improve service life of the motor stator 230. The radial dimension of the extending part 232 can be set to adapt to the novel brake 1 and the braking part 270 with a preset radial dimension. The axial dimension of the supporting part 233 can be set to adapt to the novel brake 1 and the braking part 270 with a preset axial dimension.

In some of these embodiments, the end face of the novel brake 1 remote from the braking part 270 is adjacent to the inner wall of the accommodating cavity 234 formed by the extending part 232. In this embodiment, the novel brake 1 may include a mounting element 90, by means of which the novel brake 1 is mounted to the extending part 232; a locking end of the mounting element 90 extends out from a side of the novel brake 1 in the axial direction, and the locking end is locked with the extending part 232. Specifically, the mounting element 90 may be a bolt, a screw, a pin, a rivet, or the like. Certainly, the novel brake 1 may also be mounted to the extending part 232 by means of bonding, welding, clamping or other methods, which is not limited herein. By fixing the novel brake 1 to the inner wall of the extending part 232, the wobble of the novel brake 1 during operation can be reduced, the impact and friction generated in the working process can be lessened, and the mechanical damage to the novel brake 1 can be mitigated. Meanwhile, the total axial thickness of the novel brake 1 and the motor stator 230 can be reduced, that is, the novel brake 1 can be entirely accommodated in the accommodating cavity 234 as much as possible, thereby reducing the overall volume of the hub motor.

The novel brake 1 further includes a supporting element, which is sleeved on the mounting element 90; one end of the supporting element in the axial direction abuts against the extending part 232, and the other end abuts against the braking stator 10, so as to keep the novel brake 1 and the motor stator 230 spaced apart. Specifically, according to the mounting direction of the novel brake 1, the supporting element can abut against the first end face 11 or the second end face 12 of the braking stator 10. The mounting position of the novel brake 1 can be adjusted by replacing supporting elements with different lengths, and the supporting element can ensure the full contact between the matching part 51 and the braking part 270, and the reliability of the mounting position.

In this embodiment, the novel brake 1 may also be disposed in close contact with the inner wall of the extending part 232 without being mounted thereto by the mounting element 90. For example, the novel brake 1 can be arranged such that the braking stator 10 is in close contact with the inner wall of the extending part 232, and there is no connection relationship between the braking stator 10 and the extending part 232. Instead, the mounting effect of the novel brake 1 can be achieved by the fixed connection between the braking stator 10 and the mounting part 231. The braking stator 10 and the mounting part 231 may be fixed by means of fasteners, bonding, welding, clamping, key slots, interference fit, and the like.

All the above fitting methods of the novel brake 1 can reduce the axial thickness of the motor stator 230, enabling the novel brake 1 to be entirely accommodated in the accommodating cavity 234 as much as possible and thus reducing the overall volume of the hub motor.

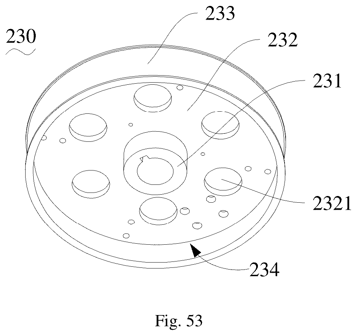

In some of these embodiments, as shown in Fig. 53, one or more heat dissipation holes 2321 are axially formed in the extending part 232. Since heat is generated during the operation of both the rotor unit and the novel brake 1, heat dissipation holes 2321 may be formed in the extending part 232 to transfer and dissipate heat, so as to avoid heat accumulation. Meanwhile, the mounting part 231, the extending part 232 and the supporting part 233 can all be made of materials with good heat dissipation performance, thereby improving the heat dissipation effect of the hub motor.

In addition, in some embodiments, the mounting part 231, the extending part 232 and the supporting part 233 may form a cross-section having a shape like ""; in some other embodiments, as shown in Fig. 53, the mounting part 231, the extending part 232 and the supporting part 233 may form a cross-section having a shape like " 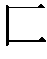 ". Certainly, other similar shapes are also feasible.

In the embodiments of the present application, the novel brake 1 may adopt a variety of structural forms. The matching relationships between the novel brake 1, the motor stator 230 and the braking part 270 when the novel brake 1 is disposed inside the hub motor will be illustrated with examples below, which are not limited to the following embodiments.

In combination with the contents of the above embodiments of the novel brake 1, please refer to Figs. 4 to 7 and Figs. 15 to 18, in some embodiments, the friction discs 50 are sleeved on the outer circumference of the braking stator 10, and the outer circumference of the braking stator 10 is a cylindrical surface parallel to the axial direction; a quantity of the friction discs 50 is N, and N is an integer greater than or equal to 1; the novel brake 1 further includes one outer movable plate 601 and N-1 middle movable plates 602, and each middle movable plate 602 is located between two adjacent friction discs 50; the braking stator 10 has a first end face 11 and a second end face 12 in the axial direction, the armature 20 is arranged adjacent to the first end face 11, the outer circumference of the braking stator 10 is provided with a limit step 13 adjacent to the first end face 11, and the limit step 13 forms a limit space facing the second end face 12 on the outer circumference of the braking stator 10; the outer movable plate 601, the N-1 middle movable plates 602 and the friction discs 50 are located in the limit space, the outer movable plate 601 is arranged adjacent to the second end face 12, the outer movable plate 601 is fixedly connected with the armature 20 through an assembly element 70, and the friction discs 50 and the N-1 middle movable plates 602 are located between the outer movable plate 601 and the limit step 13. Among them, the outer movable plate 601 and the N-1 middle movable plates 602 form the N movable plates 60 of the aforementioned novel brake 1, and the outer movable plate 601 is the one that is the farthest from the limit step 13.

Specifically, the braking stator 10 may also be referred to as a housing, casing, magnetic yoke, magnetic yoke iron core, and other technical terms commonly used in the art. A first groove 111 (i.e., the first groove 111 of the novel brake 1 in the aforementioned embodiments) and a second groove 112 (i.e., the second groove 112 of the novel brake 1 in the aforementioned embodiments) that are independent of each other are formed in the first end face 11. When the coil only includes the main coil 30, the main coil 30 is disposed in the first groove 111. When the coil includes the main coil 30 and the auxiliary coil 80, a third groove 113 is further formed in the first end face 11, the main coil 30 is disposed in the first groove 111, and the auxiliary coil 80 is disposed in the third groove 113. The number of the main coils 30 is consistent with that of the first grooves 111, which may be one or more; the number of the auxiliary coils 80 is consistent with that of the third grooves 113, which may be zero or more than one. The elastic element 40 is disposed in the second groove 112, and the number of the elastic elements 40 is consistent with that of the second grooves 112, which may be one or more. The novel brake 1 mainly relies on the structural cooperation of the braking stator 10, the main coil 30, the armature 20, the friction discs 50, the elastic element 40 and other components to achieve a braking effect. When the main coil 30 is energized, a magnetic field is generated on the outer circumference of the main coil 30, and an attractive magnetic force is produced in the gap between the braking stator 10 and the armature 20.

When N=1, as shown in Figs. 4 and 5, one friction disc 50 is provided, one outer movable plate 601 is provided, and the number of middle movable plates 602 is zero. One end face of the friction disc 50 is arranged adjacent to the outer movable plate 601, and the other end face is arranged adjacent to the limit step 13; the outer movable plate 601 is fixedly connected with the armature 20 by an assembly element 70. When braking is not required, the main coil 30 generates a magnetic field when energized, causing the armature 20 to move toward the first end face 11 against the elastic force of the elastic element 40. Meanwhile, the armature 20 drives the outer movable plate 601 to move away from the first end face 11, thereby releasing the compression of the friction disc 50 by the outer movable plate 601, and the friction disc 50 rotates together with the braking part 270 through the cooperation of the matching part 51 and the braking part 270. When braking is required, the main coil 30 is de-energized, and the armature 20 moves away from the first end face 11 under the elastic force of the elastic element 40, driving the outer movable plate 601 to move toward the first end face 11 at the same time, so as to realize the compression of the friction disc 50 by the outer movable plate 601. The two end faces of the friction disc 50 are friction-braked with the outer movable plate 601 and the limit step 13 respectively, and the friction disc 50 brakes the hub motor through the cooperation of the matching part 51 and the braking part 270.

When N> 1, as shown in Figs. 15 and 16, a plurality of friction discs 50 are provided, one outer movable plate 601 is provided, and the number of middle movable plates 602 is N-1, specifically one or more. One end face of the Nth friction disc 50 is arranged adjacent to the (N-1)th middle movable plate 602, and the other end face is arranged adjacent to the limit step 13. The outer movable plate 601 is a movable plate that is the farthest from the armature 20, and is fixedly connected with the armature 20 by the assembly element 70. No connection relationship exists between any of the middle movable plates 602 and the armature 20, and one middle movable plate 602 is arranged between every two adjacent friction discs 50. All the friction discs 50 and all the middle movable plates 602 are disposed between the outer movable plate 601 and the limit step 13.

When braking is not required, the main coil 30 generates a magnetic field upon energization, causing the armature 20 to move toward the first end face 11 against the elastic force of the elastic element 40. Meanwhile, the armature 20 drives the outer movable plate 601 to move away from the first end face 11, increasing the distance between the outer movable plate 601 and the limit step 13, thereby releasing the compression of the multiple friction discs 50 by the outer movable plate 601 and the middle movable plates 602. The multiple friction discs 50 rotate together with the braking part 270 through the cooperation of the multiple matching parts 51 and the braking part 270. When braking is required, the main coil 30 is de-energized, and the armature 20 moves away from the first end face 11 under the elastic force of the elastic element 40, driving the outer movable plate 601 to move toward the first end face 11 at the same time and reducing the distance between the outer movable plate 601 and the limit step 13. The pressing force is transmitted from the outer movable plate 601 to all the friction discs 50 and all the middle movable plates 602, thereby achieving the compression of the multiple friction discs 50 by the outer movable plate 601 and the middle movable plates 602. Both end faces of each friction disc 50 are friction-braked with the corresponding outer movable plate 601, middle movable plate 602 and limit step 13 respectively, and the multiple friction discs 50 brake the hub motor through the cooperation of the multiple matching parts 51 and the braking part 270.

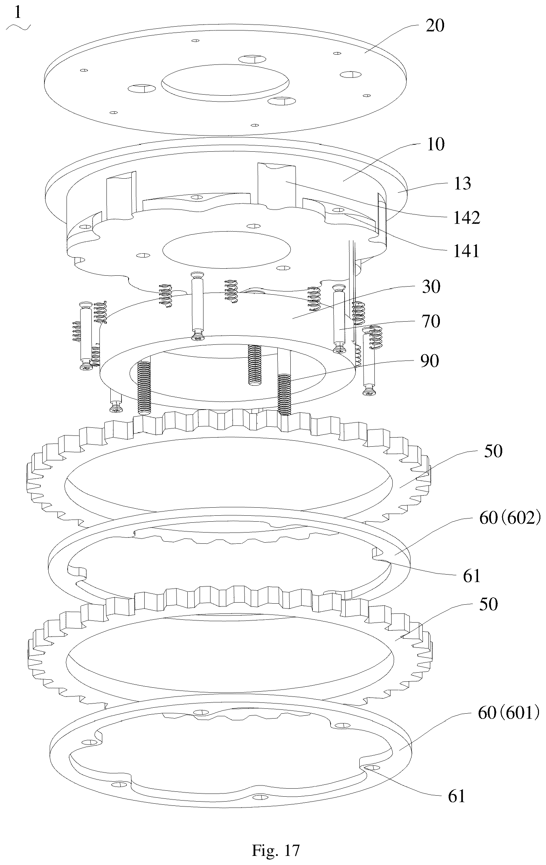

To achieve the positioning effect of the middle movable plates 602, as shown in Figs. 17 and 18, the inner peripheral contour of each middle movable plate 602 is provided with a number of positioning protrusions, and the outer peripheral contour of the braking stator 10 is formed with positioning grooves 14 matching the positioning protrusions. The projections of the positioning protrusions of different middle movable plates 602 on the first end face 11 may be fully overlapped, partially overlapped or not overlapped at all, and the shape and position of the positioning grooves 14 are designed correspondingly according to the shape and position of the positioning protrusions. The provision of the positioning protrusions and the positioning grooves 14 restricts the rotation of the middle movable plates 602, leaving them with only the degree of freedom in the axial direction. The outer movable plate 601 can achieve the positioning effect by means of the assembly element 70; certainly, positioning protrusions may also be provided on the inner peripheral contour of the outer movable plate 601, and the assembly element 70 is slidably inserted through the braking stator 10 from the positioning protrusions of the outer movable plate 601 and fixedly connected with the armature 20.

As shown in Figs. 26 to 49, the novel brake 1 may further include a manual release assembly 100, which acts on the armature 20 either directly or indirectly to control the distance between the armature 20 and the braking stator 10 as well as the distance between the outer movable plate 601 and the limit step 13, enabling the armature 20 to move away from and close to the braking stator 10 and the outer movable plate 601 to move away from and close to the friction discs 50, thereby releasing and compressing the friction discs 50. The manual release assembly 100 is applicable to application scenarios requiring manual release, which adds a release mode for the friction discs 50 and improves the convenience and flexibility of operation. Specifically, the manual release assembly 100 may adopt structures such as a rotating handwheel, a release screw, a release handle and a wedge block.

In this embodiment, in comparison with the conventional technology, the N friction discs 50, one outer movable plate 601 and N-1 middle movable plates 602 are all sleeved on the outer circumference of the braking stator 10. The thickness of the novel brake 1 depends only on the thickness of the braking stator 10 and the thickness of the armature 20. In contrast to the stacked arrangement of the friction discs 50 and the braking stator 10, the inner and outer diameters of the friction area of the friction discs 50 can be increased without increasing the thickness of the novel brake 1, thereby increasing the braking torque. In addition, the mass of the friction discs 50 can be reduced, which lessens the influence on the total inertia of the hub motor and improves the start-stop sensitivity of the hub motor while ensuring the braking effect. Since the movable plates 60 have a lower precision requirement than the friction discs 50, the production cost of the movable plates 60 is lower. The friction discs 50 rub against the movable plates 60 instead of the armature 20, so only the movable plates 60 need to be replaced during long-term use. Moreover, dust generated in the friction area where the friction discs 50 and the movable plates 60 are in contact is less likely to fall into the interior of the novel brake 1, which reduces faults of internal components. The radial dimension of the matching part 51 is larger than that of the friction area of the friction discs 50, making it easier to control the geometric and position tolerances of the plane where the friction area is located relative to the central axis during the production process, which facilitates machining and manufacturing and makes it easier to achieve a higher qualified rate. When the matching part 51 is subjected to force, the generated stress and strain are smaller, which can prolong the service life of the friction discs 50.

In this embodiment, the braking stator 10 is provided with a central hole, and is sleeved on the mounting part 231 through the central hole. The second end face 12 of the braking stator 10 is disposed in close contact with the inner wall of the extending part 232. The fastening connection between the braking stator 10 and the main shaft 220 or the motor stator 230 can be achieved by means of the fastening relationship between the central hole and the mounting part 231, or the fastening relationship between the second end face 12 and the extending part 232, or alternatively the fastening relationship between other parts of the braking stator 10 and the main shaft 220, the mounting part 231, the extending part 232 or the supporting part 233.

For example, the braking stator 10 may form an interference fit with the mounting part 231 through the central hole, or achieve a key connection with the mounting part 231 by providing a key slot in the central hole. For another example, the braking stator 10 may be bonded or welded to the extending part 232 via the second end face 12. For yet another example, the braking stator 10 may be connected with the extending part 232 and the supporting part 233 by means of a mounting element 90, which may be a screw, bolt, pin, rivet or the like. In addition, the mounting element 90 does not cause spatial interference with the main coil 30, the elastic element 40, the armature 20, the friction disc 50, the outer movable plate 601 and the middle movable plate 602, thus ensuring the integrity and non-interference of the functions of all components.

In addition, the mounting direction of the novel brake 1 may also be reversed, i.e., the armature 20 is disposed adjacent to the extending part 232. To provide a certain axial movement space for the armature 20, the mounting element 90 can protrude from the side of the armature 20 and be locked in the extending part 232. A supporting element is sleeved on the mounting element 90; the supporting element is arranged to avoid the armature 20 and locked in the extending part 232, with both ends of the supporting element abutting against the first end face 11 and the extending part 232 respectively, such that a spacing is formed between the armature 20 and the extending part 232.

In this embodiment, by designing the motor stator 230 to have a structure forming an accommodating cavity 234, the braking stator 10 is disposed in close contact with the inner wall of the accommodating cavity 234, and the braking part 270 is partially located inside the accommodating cavity 234. This can greatly improve the space utilization rate, make fuller use of the spatial structure of the motor stator 230, and achieve a slim and compact design of the hub motor.

A plurality of auxiliary coils 80 may be provided in the aforementioned embodiments. The main coil 30 and the auxiliary coils 80 can be connected either in series or in parallel, which enables a variety of energization modes, thereby adjusting the magnitude of the magnetic force in the novel brake 1 and expanding its application scenarios.

In the aforementioned embodiments, the braking stator 10 is disposed in close contact with the extending part 232. In other embodiments, if a sufficient spacing can be reserved between the extending part 232 and the novel brake 1, the friction disc 50 may be arranged on the side close to the extending part 232, and the braking stator 10 may be arranged on the side remote from the extending part 232.

Certainly, in other embodiments, when the novel brake 1 is disposed outside the hub motor, it may adopt the identical structure as that of the novel brake 1 in the aforementioned embodiments. The main difference lies in that there is no spatial relationship between the novel brake 1 and the motor stator 230. The novel brake 1 can either be sleeved on the main shaft 220 or mounted on other fixed surfaces outside the hub motor without being sleeved on the main shaft 220, and the structure of the novel brake 1 itself remains unchanged, which will not be elaborated here.

In the embodiments of the aforesaid hub motor, reference may be made to the contents of the aforementioned embodiments of the novel brake 1 for the parts of the novel brake 1 that are not described in detail.

It should be understood that the components in the above embodiments may be freely combined or omitted to form different combined embodiments. The specific content of each combined embodiment will not be repeated here. After the description herein, it may be deemed that the specification has recorded each combined embodiment, which is capable of supporting different combined embodiments.

The above is only a preferred embodiment of the present application and is not intended to limit the present application. Any modification, equivalent replacement, improvement, and the like made within the spirit and principle of the present application shall all fall within the scope of protection of the present application.

## Claims

1. A novel brake, comprising:
a braking stator, having a first end face and a second end face in an axial direction, wherein the first end face is provided with a first groove and a second groove, and an outer circumference of the braking stator is provided with a limit step, the limit step forming a limit space facing the second end face on the outer circumference of the braking stator;
an armature, arranged adjacent to the first end face;
a main coil, arranged in the first groove;
an elastic element, arranged in the second groove;
N friction discs, being annular in structure, sleeved on the outer circumference of the braking stator and located in the limit space;
N movable plates, being annular in structure, sleeved on the outer circumference of the braking stator and located in the limit space, wherein the N movable plates and the N friction discs are arranged alternately, an Nth movable plate is arranged adjacent to an Nth friction disc, the Nth friction disc abuts against the limit step, and N is an integer greater than or equal to 1; and
an assembly element, fixedly connected with the armature and a first movable plate of the N movable plates, the first movable plate being farthest from the limit step among the N movable plates;
wherein, when the main coil is energized which generates a magnetic field, the armature is caused to move toward the braking stator against an elastic force of the elastic element, and the armature drives the first movable plate to move away from the N friction discs, to release the N friction discs; and
outer circumferential dimensions of the N friction discs are larger than outer circumferential dimensions of the N movable plates, and outer circumferences of the N friction discs are each provided with a matching part configured to be adapted to a braking part of a target device.

2. The novel brake according to claim 1, wherein the matching part comprises one radially extending matching protrusion; or the matching part comprises a plurality of radially extending matching protrusions, with a matching groove formed between every two adjacent matching protrusions; or the matching part is a plurality of matching grooves or a plurality of matching holes; and
when N is greater than 1, the N matching parts have shapes different from one another, have same shapes, or have shapes some of which are not same.

3. The novel brake according to claim 1, wherein an inner circumference of at least one of the N movable plates is provided with a positioning protrusion; the outer circumference of the braking stator is provided with a positioning groove adapted to the positioning protrusion; and the assembly element is slidably inserted through the braking stator.

4. The novel brake according to claim 3, wherein N is greater than 1; the N movable plates are provided with positioning protrusions; the positioning protrusion of the first movable plate is arranged in a staggered manner in a circumferential direction of the braking stator relative to positioning protrusions of remaining movable plates of the N movable plates; and a preset distance is maintained between the assembly element and the positioning protrusions of the remaining movable plates.

5. The novel brake according to claim 4, wherein the positioning groove corresponding to the positioning protrusion of the first movable plate is defined as a first positioning groove, and positioning grooves corresponding to the positioning protrusions of the remaining movable plates are defined as second positioning grooves; the first positioning groove and the second positioning grooves extend from the second end face toward the first end face, and an axial depth of the first positioning groove is smaller than that of the second positioning grooves.

6. The novel brake according to claim 3, wherein N is greater than 1; the N movable plates are provided with positioning protrusions; the positioning protrusion of the first movable plate is aligned with positioning protrusions of remaining movable plates of the N movable plates in a circumferential direction of the braking stator; projections of the positioning protrusions of the remaining movable plates in the axial direction fall within a projection of the positioning protrusion of the first movable plate in the axial direction; and a preset distance is maintained between the assembly element and the positioning protrusions of the remaining movable plates.

7. The novel brake according to claim 3, wherein a surface of the positioning protrusion comprises a first arc surface, and a surface of the positioning groove comprises a second arc surface adapted to the first arc surface.

8. The novel brake according to claim 1, wherein the first end face is further provided with a third groove; the third groove is arranged on an inner side or an outer side of the first groove; and the novel brake further comprises a secondary coil arranged in the third groove.

9. The novel brake according to claim 1, further comprising a mounting element; the mounting element and the assembly element are independent of each other; and the mounting element is adapted to the braking stator, and a locking end of the mounting element selectively extends out from the first end face or the second end face.

10. The novel brake according to claim 1, further comprising a protective structure; the protective structure and the target device enclose a sealed space; the armature, the N friction discs and the N movable plates are located in the sealed space; and the protective structure at least partially covers the braking part of the target device.

11. The novel brake according to claim 1, further comprising a manual release assembly that is a rotating element; the rotating element is adapted to the braking stator and the armature to control a distance between the braking stator and the armature, to release the N friction discs.

12. The novel brake according to claim 1, further comprising a manual release assembly that comprises a release handle, a release connector and a release elastic element; wherein the release connector is slidably inserted through the release handle and locked in the braking stator or the target device; the release elastic element is sleeved on the release connector and located between the release handle and the braking stator; and the release handle is pressed against or moved away from the armature to control a distance between the braking stator and the armature.

13. The novel brake according to claim 1, further comprising a manual release assembly that comprises a release handle, a release connector, an acting block and a release elastic element;
wherein the manual release assembly is located at an armature end; the armature is provided with a limit slot, and the release handle is provided with a connecting hole; the release connector is slidably inserted through the connecting hole and fixed in the braking stator; the release elastic element is sleeved on the release connector and located between the release handle and the braking stator; and the acting block is arranged on the release handle and slides out of or into the limit slot when the release handle rotates, so as to control a distance between the braking stator and the armature; or
wherein the manual release assembly is located at a stator end; the braking stator is provided with a limit slot, and the release handle is provided with a connecting hole; the release connector is slidably inserted through the connecting hole and fixed in the armature or the first movable plate; the release elastic element is sleeved on the release connector and located between the release handle and a head of the release connector; and the acting block is arranged on the release handle and slides out of or into the limit slot when the release handle rotates, so as to control a distance between the braking stator and the armature.

14. The novel brake according to claim 1, further comprising a manual release assembly that comprises a release handle, a driving screw and a driven screw; when the release handle is moved toward or away from the braking stator, the driven screw is selectively adapted to the armature or the first movable plate, so as to control a distance between the braking stator and the armature.

15. The novel brake according to claim 1, further comprising a manual release assembly that is a wedge block; the wedge block is configured to act between the armature and the target device, and control a distance between the braking stator and the armature by pressing the armature.

16. A hub motor, comprising:
a housing, being a hollow structure with an opening at one end;
a main shaft, rotatably connected with the housing and extending out of the housing;
a motor stator, wound around the main shaft and fixedly connected with the main shaft;
an armature winding, wound around the motor stator and fixedly connected with the motor stator;
a magnetic steel winding, wound around an inner wall of the housing, fixedly connected with the inner wall of the housing, and arranged at a radial interval from the armature winding;
an end cover, covering the opening, wound around the main shaft, and rotatably connected with the main shaft;
a braking part, wound around the main shaft and extending in an axial direction, selectively arranged on the inner wall or an outer wall of the housing or an inner wall or an outer wall of the end cover, and forming a braking cavity together with the housing or the end cover; and
a novel brake, located on a same side as the braking part, comprising a braking stator, a main coil arranged on the braking stator, an elastic element arranged on the braking stator, an armature arranged adjacent to the braking stator and friction discs; wherein the friction discs are at least partially located in the braking cavity, an outer circumference of each friction disc is provided with a matching part, the matching part is adapted to the braking part to brake the housing, the magnetic steel winding and the end cover, and a radial dimension of the matching part is larger than an outer diameter of the armature;
wherein the friction discs are sleeved on an outer circumference of the braking stator, and the outer circumference of the braking stator is a cylindrical surface parallel to the axial direction; a quantity of the friction discs is N, and N is an integer greater than or equal to 1; the novel brake further comprises one outer movable plate and N-1 middle movable plates, and each middle movable plate is located between two adjacent friction discs;
the braking stator has a first end face and a second end face in the axial direction, the armature is arranged adjacent to the first end face, the outer circumference of the braking stator is provided with a limit step adjacent to the first end face, and the limit step forms a limit space facing the second end face on the outer circumference of the braking stator; and
the outer movable plate, the N-1 middle movable plates and the friction discs are located in the limit space, the outer movable plate is arranged adjacent to the second end face, the outer movable plate is fixedly connected with the armature through an assembly element, and the friction discs and the N-1 middle movable plates are located between the outer movable plate and the limit step.

17. The hub motor according to claim 16, wherein the braking part is arranged on the inner wall of the housing or the inner wall of the end cover; the motor stator forms an accommodating cavity around the main shaft; and the braking part is at least partially located in the accommodating cavity, and the novel brake is at least partially located in the accommodating cavity.

18. The hub motor according to claim 17, wherein the motor stator comprises:
a mounting part, fixed to the main shaft, the braking stator being sleeved on the mounting part;
an extending part, connected with the mounting part, arranged on an outer circumference of the mounting part, and provided with a heat dissipation hole; and
a supporting part, connected with the extending part and arranged on an outer circumference of the extending part;
wherein an axial dimension of the mounting part is larger than an axial dimension of the extending part, an axial dimension of the supporting part is larger than an axial dimension of the extending part, and the accommodating cavity is formed by the mounting part, the extending part and the supporting part.

19. The hub motor according to claim 18, wherein the novel brake further comprises a mounting element; a locking end of the mounting element extends out from a side of the novel brake in the axial direction, and the locking end is locked with the extending part.

20. The hub motor according to claim 19, wherein the novel brake further comprises a supporting element sleeved on the mounting element; one end of the supporting element in the axial direction abuts against the extending part, and the other end abuts against the braking stator, so as to keep the novel brake and the motor stator spaced apart.

21. The hub motor according to claim 16, wherein a central hole of the braking stator is fixed to the main shaft or the motor stator.

22. The hub motor according to claim 16, wherein the braking part comprises a sub-fixed part and a sub-braking part that are connected to each other; the sub-fixed part extends in the axial direction, and is arranged around the main shaft and fixed to the housing or the end cover; and the sub-braking part protrudes from the sub-fixed part and extends in a radial direction, and is arranged around the main shaft and adapted to the matching part.

23. The hub motor according to claim 16, wherein the braking part comprises a plurality of cylinders arranged around the main shaft; and the plurality of cylinders extend in the axial direction, are adapted to the matching part, and are configured to drive the friction discs to rotate together.
